(19) Europäisches Patentamt

European Patent Office

Office européen des brevets

(11) EP 4 712 482 A1

(12) **EUROPEAN PATENT APPLICATION**
published in accordance with Art. 153(4) EPC

(43) Date of publication:
**18.03.2026 Bulletin 2026/12**

(21) Application number: **24822256.4**

(22) Date of filing: **20.02.2024**

(51) International Patent Classification (IPC):
*H04N 19/67* (2014.01)

(52) Cooperative Patent Classification (CPC):
**H04L 1/00; H04N 19/102; H04N 19/146;
H04N 19/67; H04N 21/6437**

(86) International application number:
**PCT/CN2024/077669**

(87) International publication number:
**WO 2024/255297 (19.12.2024 Gazette 2024/51)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **12.06.2023 CN 202310695127**

(71) Applicant: **Huawei Technologies Co., Ltd.
Shenzhen, Guangdong 518129 (CN)**

(72) Inventors:
• **ZHOU, Liyang
Shenzhen, Guangdong 518129 (CN)**

• **CHEN, Xiangyu
Shenzhen, Guangdong 518129 (CN)**
• **LIU, Shaoteng
Shenzhen, Guangdong 518129 (CN)**
• **QIU, Lin
Shenzhen, Guangdong 518129 (CN)**
• **LIU, Zhihui
Shenzhen, Guangdong 518129 (CN)**

(74) Representative: **Goddar, Heinz J.
Boehmert & Boehmert
Anwaltspartnerschaft mbB
Pettenkoferstrasse 22
80336 München (DE)**

(54) **CODING METHOD, DECODING METHOD, AND COMPUTING DEVICE**

(57) This application proposes an encoding method, a decoding method, and a computing device. In the encoding method, each sent encoded data packet includes a plurality of data packets, that is, a plurality of data packets may be stacked into a large encoded data packet for sending, so that network bandwidth can be reduced. In addition, a plurality of sent encoded data packets include a second-type encoded data packet, the second-type encoded data packet includes a second-type redundant data packet, and the second-type redundant data packet is determined by performing an operation on a plurality of original data packets, so that a strong packet loss concealment capability is achieved. In other words, the encoding method provided in this application can ensure that small network bandwidth is occupied and a strong packet loss concealment capability is achieved.

Method 500

```
Encoder side                          Decoder side

501: Generate a plurality of encoded data
packets based on a plurality of original
data packets

           502: Send the plurality of
           encoded data packets
                                   503: Receive the plurality of encoded
                                   data packets

                                   504: Decode the plurality of encoded data
                                   packets to obtain the plurality of original
                                   data packets
```

FIG. 5

**Description**

This application claims priority to Chinese Patent Application No. 202310695127.9, filed with the China National Intellectual Property Administration on June 12, 2023, and entitled "ENCODING METHOD, DECODING METHOD, AND COMPUTING DEVICE", which is incorporated herein by reference in its entirety.

**TECHNICAL FIELD**

This application relates to the encoding and decoding field, and more specifically, to an encoding method, a decoding method, and a computing device.

**BACKGROUND**

In the era of big data, audio and video applications are increasingly widespread, becoming an important way for people to obtain, release, and exchange information. Currently, online audio-visual users in China are saturated, and the users are more concerned about experience of audio and video services. This prompts development of audio and video service systems from on-demand and live broadcast to real-time audios and videos, aiming to provide the users with low-latency, high-definition, and high-smoothness experience. Audio and video coding technologies are required for better data transmission and storage. Generally, an expected coding scheme may meet the following four conditions at the same time: low network bandwidth occupation, low encoding and decoding complexity, a strong continuous packet loss concealment capability, and a strong random packet loss concealment capability.

However, a current coding technology either excels in data packet loss concealment performance or performance of reducing network bandwidth occupation, and there is no coding method that can implement both better packet loss concealment performance and network bandwidth occupation performance.

Therefore, a coding method is required to ensure both packet loss concealment performance and network bandwidth occupation performance.

**SUMMARY**

This application provides a coding method, so that packet loss concealment performance can be ensured and network bandwidth occupation can also be reduced.

According to a first aspect, an encoding method is provided. The method may be performed by a computing device, or may be performed by a component (for example, a chip or a circuit) of a computing device, or may be performed by each server or virtual machine in a cloud service system. This is not limited.

The method includes: generating a plurality of encoded data packets based on a plurality of original data packets, where the plurality of encoded data packets include a first-type encoded data packet and a second-type encoded data packet, the first-type encoded data packet is determined based on the plurality of original data packets, the second-type encoded data packet is determined based on a first-type redundant data packet and a second-type redundant data packet, the first-type redundant data packet is determined based on one original data packet, and the second-type redundant data packet is determined by performing an operation on the plurality of original data packets; and sending the plurality of encoded data packets.

Optionally, generating the plurality of encoded data packets based on the plurality of original data packets includes: generating a plurality of redundant data packets based on the plurality of original data packets, where the plurality of redundant data packets include the first-type redundant data packet and the second-type redundant data packet; and encapsulating the plurality of original data packets and the plurality of redundant data packets to generate the plurality of encoded data packets.

In this application, "first-type redundant data packet" is essentially an original data packet in the plurality of original data packets. For example, a redundant data packet #R1 may be actually an original data packet #S3. For another example, a redundant data packet #R2 may be actually an original data packet #S4.

In this application, "second-type redundant data packet" may be understood as being determined by performing an operation (for example, an algebraic operation) on the plurality of original data packets. For example, the second-type redundant data packet may be determined by performing a modulo 2 addition operation on the plurality of original data packets. For example, it is assumed that the redundant data packet #R1 is a dual modular redundant data packet. For example, an original data packet #S1 and the original data packet #S3 may be used to determine the redundant data packet #R1. For example, the original data packet #S1 is "100" and an original data packet #S2 is "010", and a modulo 2 addition operation is performed on the original data packet #S1 and the original data packet #S2, to obtain that the redundant data packet #R1 is "110". In this application, the operation performed on the plurality of original data packets may alternatively be, for example, a binary multiplication operation. This is not limited.

In this application, "the first-type encoded data packet is determined based on the plurality of original data packets" means that each first-type encoded data packet is determined based on the plurality of original data packets. Similarly, "the second-type encoded data packet is determined based on the first-type redundant data packet and the second-type redundant data packet" means that each second-type encoded data packet is determined based on the first-type redundant data packet and the second-type redundant data packet.

Based on the foregoing technical solution, each sent encoded data packet includes a plurality of data packets, that is, a plurality of pieces of data may be stacked into a large encoded data packet for sending, so that network bandwidth can be reduced. In addition, the plurality of sent encoded data packets include the second-type encoded data packet, this type of encoded data packet includes the second-type redundant data packet, and the second-type redundant data packet is determined by performing the operation on the plurality of original data packets, so that a strong packet loss concealment capability is achieved. In other words, the encoding method provided in this application can ensure that small network bandwidth is occupied and a strong packet loss concealment capability is achieved.

With reference to the first aspect, in a possible implementation, a code rate of the plurality of encoded data packets is $Q2/Q1$, and a quantity of original data packets is $N$; and generating the plurality of encoded data packets based on the plurality of original data packets includes: encapsulating the $N$ original data packets into $K$ first-type encoded data packets, where each first-type encoded data packet includes $N/K$ different original data packets; and determining a quantity of second-type encoded data packets based on the quantity of original data packets, the code rate, and the quantity of first-type encoded data packets, where the quantity of second-type encoded data packets is $[K \div (Q2/Q1)-K]$, and a quantity of first-type redundant data packets and second-type redundant data packets included in each second-type encoded data packet is $N/K$, where both $Q1$ and $Q2$ are integers greater than 0, $Q1$ is greater than $Q2$, both $N$ and $K$ are integers greater than or equal to 2, and $N$ is greater than or equal to $K$.

In this application, the code rate may be determined by a person skilled in the art. For example, the code rate $Q2/Q1$ is an even number. For example, the code rate $Q2/Q1$ is 1/4 or 1/6. For example, the quantity of original data packets may alternatively be pre-determined.

In this application, a quantity of data packets included in each encoded data packet may be first determined, for example, may be denoted as $m$; then, a total quantity of first-type encoded data packets may be determined based on a total quantity of original data packets; and an amount of second-type encoded data packets is determined based on the code rate. Generally, the quantity of data packets included in each encoded data packet is related to the code rate. For example, when the code rate is 1/4, $m$ is 2, and $N$ is 8. For another example, when the code rate is 1/6, $m$ is 3, and $N$ is 9. A smaller code rate indicates a larger value of $m$. This is because a smaller code rate indicates more redundant data packets. To reduce network bandwidth occupation, more data packets may be placed in each encoded packet.

Based on the foregoing technical solution, in this application, the quantity of first-type encoded data packets may be first determined, and then the quantity of second-type original data packets is determined based on the quantity of original data packets, the code rate, and the quantity of first-type encoded data packets.

With reference to the first aspect, in a possible implementation, the plurality of encoded data packets further include a third-type encoded data packet, and the third-type encoded data packet is determined based on the second-type redundant data packet.

With reference to the first aspect, in a possible implementation, the code rate of the plurality of encoded data packets is $L2/L1$, and the quantity of original data packets is $N$; and generating the plurality of encoded data packets based on the plurality of original data packets includes: encapsulating the $N$ original data packets into the $K$ first-type encoded data packets, where each first-type encoded data packet includes the $N/K$ different original data packets; and determining the quantity of second-type encoded data packets and a quantity of third-type encoded data packets based on the quantity of original data packets, the code rate, and the quantity of first-type encoded data packets, where the quantity of third-type encoded data packets is $(K-1)$, the quantity of second-type encoded data packets is $[K \div (L2/L1)-K-(K-1)]$, a quantity of second-type redundant data packets included in each third-type encoded data packet is $N/K$, and the quantity of first-type redundant data packets and second-type redundant data packets included in each second-type encoded data packet is $N/K$, where both $L1$ and $L2$ are integers greater than 0, $L1$ is greater than $L2$, both $N$ and $K$ are integers greater than or equal to 2, and $N$ is greater than or equal to $K$.

In this application, the code rate may be determined by a person skilled in the art. For example, the code rate $L2/L1$ is an odd number. For example, the code rate $L2/L1$ is 1/5 or 1/7. For example, the quantity of original data packets may alternatively be pre-determined.

In this application, for example, a quantity of original data packets included in each first-type encoded data packet may be first determined (for example, each first-type encoded data packet includes the $N/K$ original data packets), then the quantity of second-type encoded data packets may be further determined, and finally the quantity of third-type encoded data packets is determined based on the code rate. It should be noted that, when the code rate is an even number, and when an encoded data packet is added subsequently, a third-type encoded packet is added instead of a second-type encoded data packet (which may also be understood as a pure L-packet, that is, a second-type redundant data packet is added), to improve packet loss concealment performance. Therefore, the L-packets all are determined by performing an algebraic operation on the plurality of original data packets. In this way, an encoded packet constructed in this manner has a strong packet loss concealment capability.

With reference to the first aspect, in a possible implementation, the quantity of original data packets is P, and the code rate of the plurality of encoded data packets is R2/R1; and generating the plurality of encoded data packets based on the plurality of original data packets includes: generating P first-type encoded data packets according to a redundant audio data RED coding method and the quantity of original data packets; and determining the quantity of second-type encoded data packets based on the quantity of original data packets, the code rate, and the quantity of first-type encoded data packets, where the quantity of second-type encoded data packets is $[(P/m) \div (R2/R1)-P]$, and the quantity of first-type redundant data packets and second-type redundant data packets included in each second-type encoded data packet is P/m, where both R1 and R2 are integers greater than 0, R1 is greater than R2, P is an integer greater than or equal to 2, and P is greater than or equal to m.

With reference to the first aspect, in a possible implementation, the quantity of original data packets is P, and the code rate of the plurality of encoded data packets is R2/R1; and generating the plurality of encoded data packets based on the plurality of original data packets includes: generating P first-type encoded data packets according to a redundant audio data RED coding method and the quantity of original data packets; and determining the quantity of second-type encoded data packets and the quantity of third-type encoded data packets based on the quantity of original data packets, the code rate, and the quantity of first-type encoded data packets, where the quantity of third-type encoded data packets is (P-1), the quantity of second-type encoded data packets is $[(P/m) \div (R2/R1)-P-(P-1)]$, the quantity of first-type redundant data packets and second-type redundant data packets included in each second-type encoded data packet is P/m, and the quantity of second-type redundant data packets included in each third-type encoded data packet is P/m, where both R1 and R2 are integers greater than 0, R1 is greater than R2, P is an integer greater than or equal to 2, and P is greater than or equal to m.

In this application, the value of m is generally related to the code rate. For example, when the code rate is 1/4, m is 2, and N is 8. For another example, when the code rate is 1/6, m is 3, and N is 9. A smaller code rate indicates a larger value of m. This is because a smaller code rate indicates more redundant data packets. To reduce network bandwidth occupation, more data packets may be placed in each encoded packet.

In consideration of a delay problem, the technical solution of this application may be further optimized. In the foregoing solution, the RED solution may be combined with the encoding method provided in this application. Specifically, in an early stage of data packet generation, there are fewer data blocks, and the RED solution may be selected for encoding first; and in middle and later stages, when there are sufficient data blocks, the encoding method provided in this application may be used. This can reduce a data packet sending delay, effectively improve encoding efficiency, and improve user experience.

With reference to the first aspect, in a possible implementation, a packet header of each of the plurality of encoded data packets carries a mask table, and the mask table indicates a type of each encoded data packet.

According to a second aspect, a decoding method is provided. The method includes: receiving a plurality of encoded data packets, where the plurality of encoded data packets include a first-type encoded data packet and a second-type encoded data packet, the first-type encoded data packet is determined based on a plurality of original data packets, the second-type encoded data packet is determined based on a first-type redundant data packet and a second-type redundant data packet, the first-type redundant data packet is determined based on one original data packet, and the second-type redundant data packet is determined by performing an operation on the plurality of original data packets; and decoding the plurality of encoded data packets to obtain the plurality of original data packets.

With reference to the second aspect, in a possible implementation, that the second-type redundant data packet is determined based on the plurality of original data packets includes: The second-type redundant data packet is determined by performing a modulo 2 addition operation on the plurality of original data packets.

With reference to the second aspect, in a possible implementation, the plurality of encoded data packets further include a third-type encoded data packet, and the third-type encoded data packet includes the second-type redundant data packet.

With reference to the second aspect, in a possible implementation, a packet header of each of the plurality of encoded data packets carries a mask table, and the mask table indicates a type of each encoded data packet.

In this application, the packet header of each sent encoded data packet carries the mask (mask) table, and the mask table may indicate whether each sent encoded packet is a first-type encoded packet or a second-type encoded packet, to assist a receiving end in decoding different types of received encoded data packets.

For example, the receiving end may decode the received second-type redundant data packet based on the first-type encoded data packet and the first-type redundant data packet, to obtain more original data packets. In this way, when a network status is poor, an original data packet that is lost in a network in a process of sending an encoded data packet may be obtained by decoding the second-type redundant data packet. In other words, based on the method provided in this application, the receiving end can recover the original data packet.

According to a third aspect, this application provides a computing device. The device is configured to perform the method according to the first aspect. Specifically, the device may include a unit and/or a module configured to perform the encoding method provided in this application, for example, a transceiver unit and/or a processing unit.

According to a fourth aspect, this application provides a computing device. The device is configured to perform the method according to the second aspect. Specifically, the device may include a unit and/or a module configured to perform the decoding method provided in this application, for example, a transceiver unit and/or a processing unit.

According to a fifth aspect, a computing device is provided. The device includes at least one processor, configured to execute a computer program or instructions stored in a memory, to perform the method according to the first aspect. Optionally, the device further includes the memory, configured to store the computer program or the instructions. Optionally, the device further includes a communication interface, and the processor reads, through the communication interface, the computer program or the instructions stored in the memory.

In an implementation, the device is a functional computing device configured to implement the encoding method provided in this application in a chip.

In another implementation, the device is a functional chip, chip system, or circuit configured to implement the encoding method provided in this application in a chip.

According to a sixth aspect, a computing device is provided. The device includes at least one processor, configured to execute a computer program or instructions stored in a memory, to perform the method according to the second aspect. Optionally, the device further includes the memory, configured to store the computer program or the instructions. Optionally, the device further includes a communication interface, and the processor reads, through the communication interface, the computer program or the instructions stored in the memory.

In an implementation, the device is a functional computing device configured to implement the decoding method provided in this application in a chip.

In another implementation, the device is a functional chip, chip system, or circuit configured to implement the decoding method provided in this application in a chip.

According to a seventh aspect, this application provides a processor, including an input circuit, an output circuit, and a processing circuit. The processing circuit is configured to: receive a signal through the input circuit, and transmit a signal through the output circuit, so that the processor performs the method according to the first aspect or the second aspect.

In a specific implementation process, the processor may be one or more chips, the input circuit may be an input pin, the output circuit may be an output pin, and the processing circuit may be a transistor, a gate circuit, a trigger, any logic circuit, or the like. An input signal that is received by the input circuit may be received and input by, for example, but not limited to, a transceiver, and a signal that is output by the output circuit may be output to, for example, but not limited to, a transmitter and transmitted by the transmitter. In addition, the input circuit and the output circuit may be a same circuit, and the circuit is used as the input circuit and the output circuit at different moments. Specific implementations of the processor and the various circuits are not limited in embodiments of this application.

Operations such as sending and obtaining/receiving related to the processor may be understood as operations such as outputting, receiving, and inputting of the processor or sending and receiving operations performed by a radio frequency circuit and an antenna, unless otherwise specified, or provided that the operations do not contradict actual functions or internal logic of the operations in related descriptions. This is not limited in this application.

According to an eighth aspect, a processing device is provided, including a processor and a memory. The processor is configured to: read instructions stored in the memory, receive a signal through a transceiver, and transmit a signal through a transmitter, to perform the method according to the first aspect or the second aspect.

Optionally, there are one or more processors, and there are one or more memories.

Optionally, the memory may be integrated with the processor, or the memory and the processor are separately disposed.

In a specific implementation process, the memory may be a non-transitory (non-transitory) memory, for example, a read-only memory (read only memory, ROM). The memory and the processor may be integrated on a same chip, or may be disposed on different chips. A type of the memory and a manner in which the memory and the processor are disposed are not limited in this embodiment of this application.

It should be understood that a related data exchange process such as sending of indication information may be a process of outputting the indication information from the processor, and receiving of capability information may be a process of receiving the input capability information by the processor. Specifically, data that is output by the processor may be output to the transmitter, and input data that is received by the processor may be from the transceiver. The transmitter and the transceiver may be collectively referred to as a transceiver.

The processing device in the fifth aspect may be one or more chips. The processor in the processing device may be implemented by using hardware, or may be implemented by using software. When the processor is implemented by using hardware, the processor may be a logic circuit, an integrated circuit, or the like. When the processor is implemented by using software, the processor may be a general-purpose processor, and is implemented by reading software code stored in the memory. The memory may be integrated into the processor, or may be located outside the processor and exist independently.

According to a ninth aspect, a computing device cluster is provided, including at least one computing device. Each computing device includes a processor and a memory. The processor of the at least one computing device is configured to execute instructions stored in the memory of the at least one computing device, so that the computing device cluster performs the method according to any one of the possible implementations of the first aspect or the computing device cluster performs the method according to the second aspect.

Optionally, the processor may be a general-purpose processor, and may be implemented by using hardware, or may be implemented by using software. When the processor is implemented by using hardware, the processor may be a logic circuit, an integrated circuit, or the like. When the processor is implemented by using software, the processor may be a general-purpose processor, and is implemented by reading software code stored in the memory. The memory may be integrated into the processor, or may be located outside the processor and exist independently.

According to a tenth aspect, a computer-readable storage medium is provided. The computer-readable medium stores program code for device execution, and the program code is used to perform the method according to the first aspect or the second aspect.

According to an eleventh aspect, a computer program product including instructions is provided. When the computer program product runs on a computer, the computer is enabled to perform the method according to the first aspect.

According to a twelfth aspect, a chip system is provided, including a processor configured to invoke a computer program from a memory and run the computer program, so that a device in which the chip system is installed performs the method according to the first aspect or the second aspect.

## BRIEF DESCRIPTION OF DRAWINGS

FIG. 1 is a schematic flowchart of an HME audio link;
FIG. 2 is a diagram of FEC coding according to this application;
FIG. 3 is a diagram of ULP FEC coding according to this application;
FIG. 4 is a diagram of a RED coding scheme according to this application;
FIG. 5 is a schematic flowchart of a coding method 500 according to this application;
FIG. 6 is a diagram of a coding method according to this application;
FIG. 7 is a diagram of another coding method according to this application;
FIG. 8 is a diagram of still another coding method according to this application;
FIG. 9 is a diagram of an encoding structure according to this application;
FIG. 10 is a diagram of another encoding structure according to this application;
FIG. 11 is a diagram of still another encoding structure according to this application;
FIG. 12 is a diagram of still another coding method according to this application;
FIG. 13 is a block diagram of a computing device 101 according to this application;
FIG. 14 is a block diagram of a computing device 102 according to this application; and
FIG. 15 is a block diagram of a computing device 200 according to this application.

## DESCRIPTION OF EMBODIMENTS

In the era of big data, audio and video applications are increasingly widespread, becoming an important way for people to obtain, release, and exchange information. Currently, online audio and video users in China are saturated, and the users are more concerned about experience of audio and video services. This prompts development of audio and video service systems from on-demand and live broadcast to real-time audios and videos, aiming to provide the users with low-latency, high-definition, and high-smoothness experience. Audio and video coding technologies are required for better data transmission and storage.

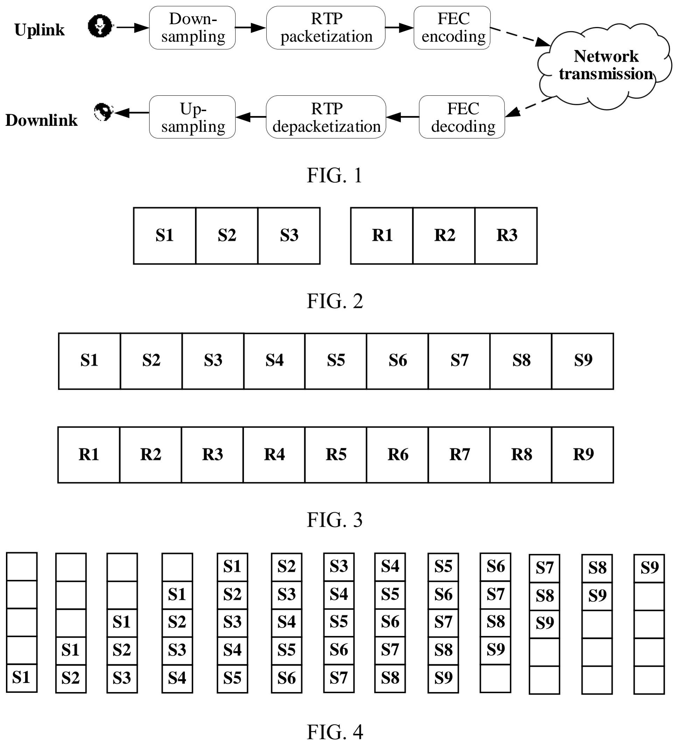

Generally, an audio/video transmission system focuses on a high-quality service. It is not feasible to transmit data without coding. When a network environment is poor (which may also be understood as a "weak network"), a large quantity of original data packets are lost during data packet sending, and retransmission causes a large delay, severely affecting user experience. A current mainstream practice is to perform FEC coding on a data packet. In this way, even if a receiving end loses some encoded data packets, original data can still be recovered by using a remaining encoded data packet. FIG. 1 shows an audio/video link. As shown in FIG. 1, a conventional hundred meg Ethernet (hundred meg Ethernet, HME) audio link is divided into two phases: an uplink phase and a downlink phase. In the uplink phase, collected data may be down-sampled first, then needs to be packed by using a real-time transport protocol (real-time transport protocol, RTP) and encoded by using a forward error correction (forward error correction, FEC) code, and then uploaded to a network for transmission. Network transmission is unstable, and packet loss often occurs on the network. Herein, FEC encoding is to prevent data loss caused by packet loss. In the downlink phase, FEC decoding needs to be performed on a received data packet first, then RTP depacketization is performed, and up-sampling is performed to obtain original data finally.

The "weak network" means a situation in which a network status is poor, which usually occurs in a network environment one kilometer away from a user terminal device. The "weak network" involves both a normal low-quality network and a sudden unstable network. How to resist impact of a weak network environment on audio service or video service experience of a user becomes a problem that needs to be urgently resolved currently, and the FEC coding technology is a key technology for resolving the problem. The following briefly describes the FEC coding technology.

FEC coding means that linear combination is performed on data packets by using algebraic means, and some redundant data packets are additionally generated. As shown in FIG. 2, S1, S2, and S3 are original data packets, and R1, R2, and R3 are additionally generated redundant data packets. It is assumed that R1=S1, R2=S1+S2, and R3=S2+S3, where "+" represents an exclusive OR operation of computer modulo 2 addition. In this case, it may be found that all original data can be recovered by receiving any three consecutive encoded data packets (for example, which are connected end to end). In other words, FEC coding shown in FIG. 2 can withstand loss of three consecutive packets.

Different FEC coding schemes generate different coding gains. Generally, an expected coding scheme may meet the following four conditions at the same time: low network bandwidth occupation, low encoding and decoding complexity, a strong continuous packet loss concealment capability, and a strong random packet loss concealment capability. One encoded data packet usually includes two parts: a packet header and data, and the packet header stores some scheduling, encoded information, and the like. However, audio data is usually very small, one encoded data packet is generated, and a packet header proportion is very close to a data proportion. Therefore, more redundant data packets generated by FEC coding indicate more packet header overheads and higher network bandwidth occupation. Generally, an FEC coding process involves two operations: addition and multiplication. However, a finite-field multiplication operation is very complex. Therefore, in many delay-sensitive scenarios, an efficient binary code (that is, the coding process includes only an addition operation but no multiplication operation) is more popular. Generally, a continuous/random packet loss concealment capability is in direct proportion to a quantity of redundant data packets, that is, more redundant data packets indicate a stronger packet loss concealment capability. Therefore, it can be learned that low network bandwidth occupation and a strong packet loss concealment capability are mutually restricted, and it is difficult for current FEC coding to consider both of them. The following describes two conventional coding methods and a code rate.

1. Uneven level protection forward error correction (uneven level protection, ULP FEC) code

ULP FEC is a conventional out-of-band redundancy addition solution, that is, a conventional block code. As shown in FIG. 3, there are two layers of encoded data packets: original data packets (S1 to S9) and redundant data packets (R1 to R9) that are generated through encoding. The two layers of encoded data packets jointly resist data loss caused by packet loss, thereby significantly improving data reliability. S1, S2, ..., and S9 are data packets, and R1, R2, ..., and R9 are redundant data packets. This solution can have a strong continuous packet loss concealment capability. For example, an FEC code in FIG. 3 can withstand loss of a maximum of 9 consecutive encoded data packets in 18 encoded data packets. However, a disadvantage of this solution is also obvious. In the out-of-band redundancy addition solution, a proportion of redundant data that needs to be generated is the same as a proportion of redundant data packets that need to be additionally generated. Therefore, in a weak network environment, a redundancy proportion increase causes an obvious network bandwidth waste.

In other words, if the out-of-band redundancy addition solution is directly used to resist the weak network environment, sufficient redundant data packets need to be added, occupying more network bandwidth and causing severe network congestion. Consequently, expected effect cannot be achieved. Therefore, the out-of-band redundancy addition solution is not recommended in the weak network environment. In addition, this out-of-band redundancy addition coding scheme has a limited random packet loss concealment capability.

2. Voice coding format forward error correction code

To reduce network bandwidth occupation, an in-band redundancy addition solution such as a redundant audio data (redundant audio data, RED) coding scheme emerges. In-band redundancy addition is actually feasible because an audio packet is small. Generally, each packet includes only dozens of bytes of data, which is equivalent to a packet header. Therefore, during RTP packetization, a plurality of small packets may be aggregated into a large packet and then sent to a network for transmission. Particularly, this manner can obviously reduce packet header overheads, and reduce network bandwidth occupation.

The in-band redundancy addition solution has an obvious advantage of reducing network bandwidth, but also has an obvious disadvantage. Specifically, an existing in-band redundancy addition coding scheme does not use an algebraic means, that is, an in-band redundant data packet is a pure data packet, and an operation does not need to be performed between data packets. FIG. 4 shows a 400% redundancy solution. Each data packet and a maximum of four previously generated data packets are aggregated into one large packet for sending. In this way, 13 encoded large packets may be generated based on nine small original data packets. This coding scheme has simple encoding and decoding operations and has no algebraic operation, and consequently has a very weak continuous packet loss concealment capability and a very weak random packet loss concealment capability. As shown in FIG. 4, only four consecutive encoded large packets in 13 encoded large packets may be allowed to be lost.

3. Code rate

The code rate, also referred to as coding efficiency, is a proportion of useful information in all information in an encoded data stream. For example, a code rate in the coding method shown in FIG. 2 is 1/2; a code rate in the coding method shown in FIG. 3 is also 1/2; and a code rate in the coding method shown in FIG. 4 is 9/45 (that is, 1/5). This is because there are totally 45 original data packets related to S1 to S9 in FIG. 4. Blank parts in the first four encoded large packets and the last four encoded large packets do not indicate that there is no original data packet, and may be understood as that other original data packets are included.

In view of this, this application provides a coding method, which not only effectively reduces network bandwidth occupation, but also achieves good packet loss concealment performance.

For example, the technical solutions of this application may be applied to an audio/video communication system, and FEC coding is performed on audio data to improve transmission system reliability.

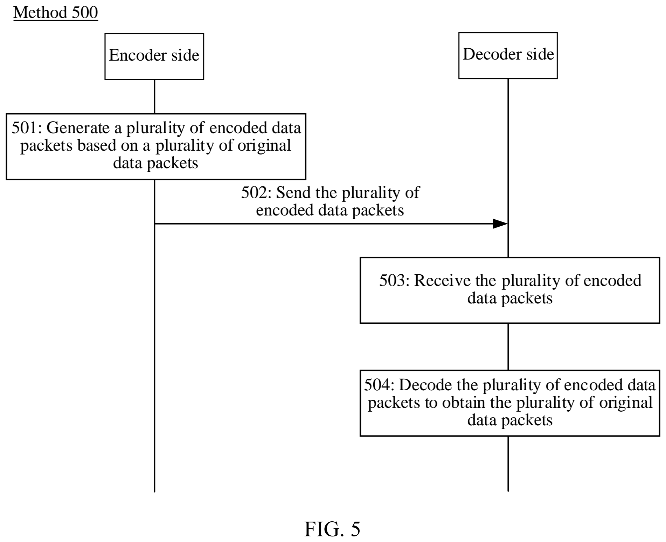

FIG. 5 is a schematic flowchart of a coding method 500 according to this application. As shown in FIG. 5, the method includes the following steps.

501: Generate a plurality of encoded data packets based on a plurality of original data packets.

In this application, the plurality of encoded data packets include a first-type encoded data packet and a second-type encoded data packet, the first-type encoded data packet is determined based on the plurality of original data packets, the second-type encoded data packet is determined based on a first-type redundant data packet and a second-type redundant data packet, the first-type redundant data packet is determined based on one original data packet, and the second-type redundant data packet is determined by performing an operation on the plurality of original data packets.

Optionally, in a possible implementation, generating the plurality of encoded data packets based on the plurality of original data packets includes: generating a plurality of redundant data packets based on the plurality of original data packets, where the plurality of redundant data packets include the first-type redundant data packet and the second-type redundant data packet; and encapsulating the plurality of original data packets and the plurality of redundant data packets to generate the plurality of encoded data packets.

The first-type redundant data packet is determined based on the one original data packet, and the second-type redundant data packet is determined based on the plurality of original data packets.

For example, the second-type redundant data packet is determined by performing a modulo 2 addition operation on the plurality of original data packets.

In this application, when more than one original data packet is generated, remaining original data and a combination of original data packets can be understood as redundant data packets. For example, the first-type redundant data packet may be understood as a data packet completely consistent with the original data packet, and the second-type redundant data packet may be understood as a data packet generated by performing some algebraic operations on at least two original data packets.

For example, a "data packet" may be understood as a binary number or a binary sequence. For example, an original data packet #1 may be understood as "100", an original data packet #2 may be understood as "010", and an original data packet #3 is "001". For example, a redundant data packet #1 may be generated by performing a modulo 2 addition operation on the original data packet #1 and the original data packet #2, and therefore the redundant data packet #1 is "110". For another example, a redundant data packet #2 may be generated by performing a modulo 2 addition operation on the original data packet #1 and the original data packet #3, and therefore the redundant data packet #2 is "101". For still another example, a redundant data packet #3 may be generated by performing a modulo 2 addition operation on the original data packet #2 and the original data packet #3, and therefore the redundant data packet #3 is "011". In this case, the redundant data packet #1 to the redundant data packet #3 may be understood as an example of the second-type redundant data packet.

Certainly, the original data packet #1 may be directly used as a redundant data packet. For example, a redundant data packet #4 is "100". The original data packet #2 may also be directly used as another redundant data packet. For example, a redundant data packet #5 is "010". In this case, the redundant data packet #4 and the redundant data packet #5 may be understood as an example of the first-type redundant data packet.

In this application, there may be the following three cases for the generated encoded data packet:

Case 1:

In a possible implementation, the plurality of generated encoded data packets include two types of encoded data packets, including the first-type encoded data packet and the second-type encoded data packet. The first-type encoded data packet is determined based on the plurality of original data packets, and the second-type encoded data packet is determined based on the first-type redundant data packet and the second-type redundant data packet.

Assuming that a code rate of the plurality of encoded data packets is preset to $Q_2/Q_1$, and a quantity of original data packets is N, the N original data packets may be encapsulated into K first-type encoded data packets, where each first-type encoded data packet includes N/K different original data packets. In this case, a quantity of second-type encoded data packets may be determined based on the quantity of original data packets, the code rate, and the quantity of first-type encoded data packets, where the quantity of second-type encoded data packets is $[K \div (Q_2/Q_1)-K]$, and a quantity of first-type redundant data packets and second-type redundant data packets included in each of the $[K \div (Q_2/Q_1)-K]$ second-type encoded data packets is N/K.

In this application, both $Q_1$ and $Q_2$ are integers greater than 0, $Q_1$ is greater than $Q_2$, both N and K are integers greater than or equal to 2, and N is greater than or equal to K.

Case 2:

In another possible implementation, the plurality of generated encoded data packets include three types of encoded data packets, including the first-type encoded data packet, the second-type encoded data packet, and third-type encoded data packet. The first-type encoded data packet is determined based on the plurality of original data packets, the second-type encoded data packet is determined based on the first-type redundant data packet and the second-type redundant data packet, and the third-type encoded data packet is determined based on the second-type redundant data packet.

Assuming that a code rate of the plurality of encoded data packets is preset to $L_2/L_1$, and a quantity of original data packets is N, the N original data packets may be encapsulated into K first-type encoded data packets, where each first-type encoded data packet includes N/K different original data packets; and then a quantity of second-type encoded data packets and a quantity of third-type encoded data packets are determined based on the quantity of original data packets, the code rate, and the quantity of first-type encoded data packets, where the quantity of third-type encoded data packets is (K-1), the quantity of second-type encoded data packets is $[K+(L_2/L_1)-K-(K-1)]$, a quantity of second-type redundant data packets included in each third-type encoded data packet is N/K, and a quantity of first-type redundant data packets and second-type redundant data packets included in each second-type encoded data packet is N/K.

In this application, both $L_1$ and $L_2$ are integers greater than 0, $L_1$ is greater than $L_2$, both N and K are integers greater than or equal to 2, and N is greater than or equal to K.

Case 3:

This application proposes that an existing RED method may be combined with the method in Case 1 or Case 2 described in this application when the encoded data packet is generated.

In a possible implementation, a quantity of original data packets is P; and assuming that a code rate of the plurality of encoded data packets is $R_2/R_1$, P first-type encoded data packets may be generated according to a redundant audio data RED coding method and the quantity of original data packets; and a quantity of second-type encoded data packets is determined based on the quantity of original data packets, the code rate, and the quantity of first-type encoded data packets, where the quantity of second-type encoded data packets is $[(P/m) \div (R_1/R_2)-P]$, and a quantity of first-type redundant data packets and second-type redundant data packets included in each of the $[(P/m) \div (R_1/R_2)-P]$ second-type encoded data packets is P/m.

In another possible implementation, a quantity of original data packets is P; and assuming that a code rate of the plurality of encoded data packets is $R_2/R_1$, P first-type encoded data packets are generated according to a redundant audio data RED coding method and the quantity of original data packets; and a quantity of second-type encoded data packets and a quantity of third-type encoded data packets are determined based on the quantity of original data packets, the code rate, and the quantity of first-type encoded data packets, where the quantity of third-type encoded data packets is (P-1), the quantity of second-type encoded data packets is $[(P/m) \div (R_2/R_1)-P-(P-1)]$, a quantity of first-type redundant data packets and second-type redundant data packets included in each second-type encoded data packet is P/m, and second-type redundant data packets included in the third-type encoded data packet is P/m.

In this application, both $R_1$ and $R_2$ are integers greater than 0, $R_1$ is greater than $R_2$, P is an integer greater than or equal to 2, and P is greater than or equal to m.

In this application, the code rate may be determined by a person skilled in the art. For example, the code rate $Q_2/Q_1$ is an even number. For example, the code rate $Q_2/Q_1$ is 1/4 or 1/6. For example, the quantity of original data packets may alternatively be pre-determined. In this application, a quantity of data packets included in each encoded data packet may be first determined, for example, may be denoted as m; then a total quantity of first-type encoded data packets may be determined based on a total quantity of original data packets; and an amount of second-type encoded data packets is determined based on the code rate. Generally, the quantity of data packets included in each encoded data packet is related to the code rate. For example, when the code rate is 1/4, m is 2, and N is 8. For another example, when the code rate is 1/6, m is 3, and N is 9 (a value of N affects a delay, and N is generally less than or equal to 15). A smaller code rate indicates a larger value of m. This is because a smaller code rate indicates more redundant data packets. To reduce network bandwidth occupation, more data packets may be placed in each encoded packet.

In this application, based on the foregoing technical solution, each sent encoded data packet includes a plurality of data packets, that is, a plurality of pieces of data may be stacked into a large encoded data packet for sending, so that network bandwidth can be reduced. In addition, the plurality of sent encoded data packets include the second-type encoded data packet and the third-type encoded data packet, both the two types of encoded data packets include the second-type redundant data packet, and the second-type redundant data packet is determined by performing the operation on the plurality of original data packets. Therefore, a strong packet loss concealment capability is achieved. In other words, the coding method provided in this application can ensure that small network bandwidth is occupied and a strong packet loss concealment capability is achieved.

For example, the following specifically describes, for the foregoing different cases separately, specific data packets included in each generated encoded data packet.

Case 1:

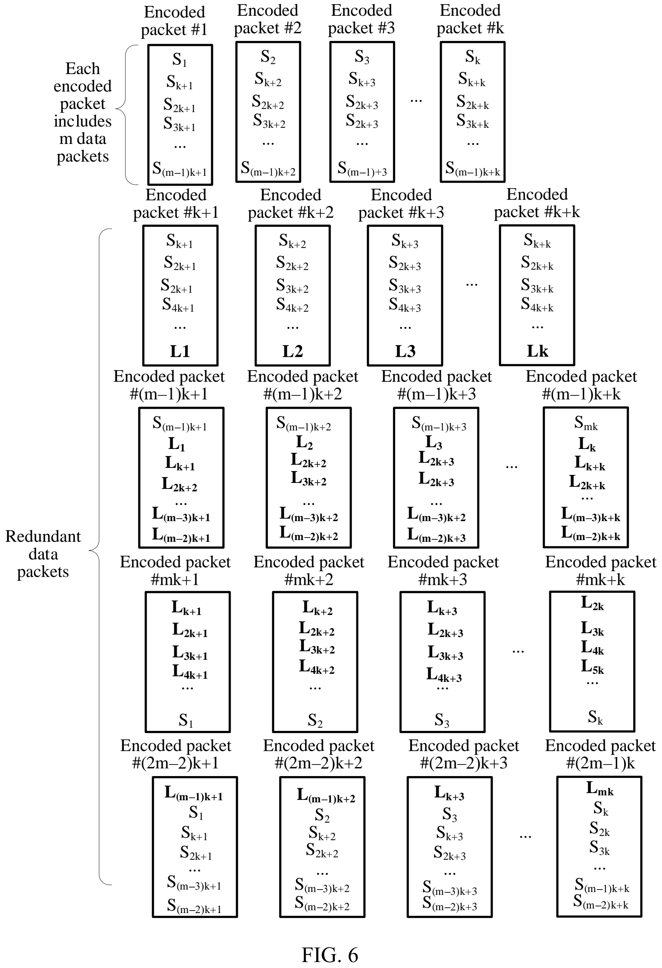

It is assumed that the code rate is an odd number, for example, the code rate is $\dfrac{1}{2m-1}$, and it is assumed that $N$ original data packets ($N$ is an integer greater than or equal to 2) are input in total. A person skilled in the art may pre-determine a quantity of data packets included in each large encoded packet, for example, m. In this case, it may be further determined that the quantity of first-type encoded data packets is $k = N/m$. In this application, $mk$ original data packets may be respectively denoted as $S_1, S_2, S_3, ..., S_{mk}$. In this case, it is determined, based on the code rate and the quantity of original data packets, that $(2m-1)k$ encoded data packets (a total quantity of data packets is $(2m-1)km$) may be generated in total. Specifically, FIG. 6 shows data packets that may be included in each encoded data packet. As shown in FIG. 6, the first k encoded data packets in the encoded data packets are pure original data packets. For example, $m$ different original data packets included in an encoded data packet #1 are respectively $S_1, S_{k+1}, S_{2k+1}, S_{3k+1}, ..., S_{(m-1)k+1}$, and $m$ different original data packets included in an encoded data packet #2 are respectively $S_2, S_{k+2}, S_{2k+2}, S_{3k+2}, ..., S_{(m-1)k+2}$. For example, $m$ different original data packets included in an encoded data packet #3 are respectively $S_3, S_{k+3}, S_{2k+3}, S_{3k+3}, ..., S_{(m-1)k+3}$, and m different original data packets included in an encoded data packet #k are respectively $S_k, S_{k+k}, S_{2k+k}, S_{3k+k}, ..., S_{(m-1)k+k}$. It can be learned from FIG. 6 that a data packet in each of a $(k+1)^{th}$ encoded data packet to a $(2m-1)k^{th}$ encoded data packet designed in this application may be understood as a "redundant data packet". These redundant data packets include not only a pure original data packet, but also an L-packet formed by performing an algebraic operation on a plurality of original data packets.

It can be learned from FIG. 6 that there are two types of redundant data packets. A first-type redundant data packet is a pure original data packet, and a second-type redundant data packet is determined by performing an algebraic operation on the plurality of original data packets. For example, the second-type redundant data packet is an L-packet. It can be learned from FIG. 6 that there may also be $mk$ L-packets, for example, which are respectively $L_1, L_2, ..., L_k, L_{k+1}, L_{k+2}, L_{k+3}, L_{k+k}, L_{2k+1}, L_{2k+2}, L_{2k+3}, L_{2k+k}, ..., L_{(m-1)k+1}, L_{(m-1)k+2}, ..., L_{(m-1)k+k}$. Any data packet is $L_i = S_{(i-1 \bmod mk)+1} + S_{(i \bmod mk)+1}, 1 \leq i \leq mk$. $L_i$ is a redundant packet obtained by performing an exclusive OR operation on two original data packets. For example, assuming that m=3 and k=3, $L_3 = S_{[(3-1) \bmod 9]+1} + S_{(3 \bmod 9)+1} = S_3 + S_4$. It should be noted that the formula $L_i$ provided in this application is merely an example. In this application, $L_i$ indicates that the second-type redundant data packet is a dual modular redundant data packet. This is because $L_i$ is determined by performing an algebraic operation on two original data packets. Certainly, this application does not exclude that the second-type redundant data packet is determined by performing an algebraic operation on more than two original data packets. For example, $L_i$ may be a triple modular redundant data packet or a quadruple modular redundant data packet. This is not limited.

FIG. 6 is a diagram of a coding method according to this application. The method has a strongest continuous packet loss concealment capability. To be specific, all original data packets can be reconstructed from any k consecutive encoded data packets (including encoded data packets connected end to end). This can withstand loss of any $(2m-2)k$ consecutive large encoded data packets (including encoded data packets connected end to end).

Each encoded data packet shown in FIG. 6 may alternatively be represented by a mask (mask) table. Generally, the mask table is attached to a packet header of each packet. In this case, a structure of the encoded data packet in FIG. 6 may be converted into a form of a mask table for representation. Matrix (1) and Matrix (2) below both are matrices with $m$

rows and columns. It may be understood that the matrix includes $m$ row vectors $e_t$, where $e_t = e_{ik+j}$, and $1 \leq ik + j \leq mk$. In the row vectors, only one element is "1", and the other elements all are "0". Matrix (1) may represent any one of the first $mk$ encoded data packets. Matrix (2) may represent any one of an $(mk+1)^{th}$ encoded data packet to a $(2m-1)k^{th}$ encoded data packet.

(1) A mask table of a $(t=ik+j)^{th}$ encoded data packet is shown by Matrix (1) below. In Matrix (1), $0 \leq i \leq m-1$, and $1 \leq j \leq k$. It may also be understood that the first $mk$ encoded data packets in FIG. 6 may be represented by Matrix (1) below.

$$M_{ik+j} = \begin{bmatrix} e_{ik+j} \\ e_{(i+1)k+j} \\ e_{(i+2)k+j} \\ \cdots \\ e_{(m-1)k+j} \\ e_{0k+j} \\ e_{k+j} + e_{k+j+1} \\ e_{2k+j} + e_{2k+j+1} \\ \cdots \\ e_{(i-1)k+j} + e_{(i-1)k+j+1} \end{bmatrix} \qquad \text{Matrix (1)}$$

It should be noted that, in this application, a form similar to "$e_{k+j} + e_{k+j+1}$" in the matrix may be understood as an $L$-packet, as $L_i = S_{(i-1 \bmod mk)+1} + S_{(i \bmod mk)+1}$, $1 \leq i \leq mk$ mentioned above. For "$e_{(i-1)k+j} + e_{(i-1)k+j+1}$" in the matrix, "$(i-1)k + j$" may be understood as $i$ in the formula $L_i$.

It should be noted that, for a specific encoded data packet in this application, $i$ and $j$ are also determined. For example, for a $2k^{th}$ encoded data packet in FIG. 6, a value of $i$ is 1, and a value of $j$ is k. For another example, for an $(mk+2)^{th}$ encoded data packet in FIG. 6, a value of $i$ is $m$, and a value of $j$ is 2.

(2) A mask table of a $(t=ik+j)^{th}$ encoded data packet is shown by Matrix (2) below. In Matrix (2), $m \leq i \leq 2m-2$, and $1 \leq j \leq k$. It may also be understood that an $(mk+1)^{th}$ encoded data packet to a $(2m-1)k^{th}$ encoded data packet in FIG. 6 may be represented by Matrix (2) below.

$$M_{ik+j} = \begin{bmatrix} e_{(i-m+1)k+j} + e_{(i-m+1)k+j+1} \\ e_{(i-m+2)k+j} + e_{(i-m+2)k+j+1} \\ e_{(i-m+3)k+j} + e_{(i-m+3)k+j+1} \\ \cdots \\ e_{(m-1)k+j} + e_{(m-1)k+j+1} \\ e_{0k+j} \\ e_{k+j} \\ e_{2k+j} \\ \cdots \\ e_{(i-m)k+j} \end{bmatrix} \qquad \text{Matrix (2)}$$

It should be noted that, in this application, for "$e_{(i-1)k+j} + e_{(i-1)k+j+1}$" in the matrix, when a subscript $i + j > mk$, a modulo operation needs to be performed on $mk$ according to the formula $L_i$. For example, assuming that $i = mk, j = 1$, $e_{i+j} = e_{[(mk+1-1)\bmod mk]+1} = e_1$.

Case 2:

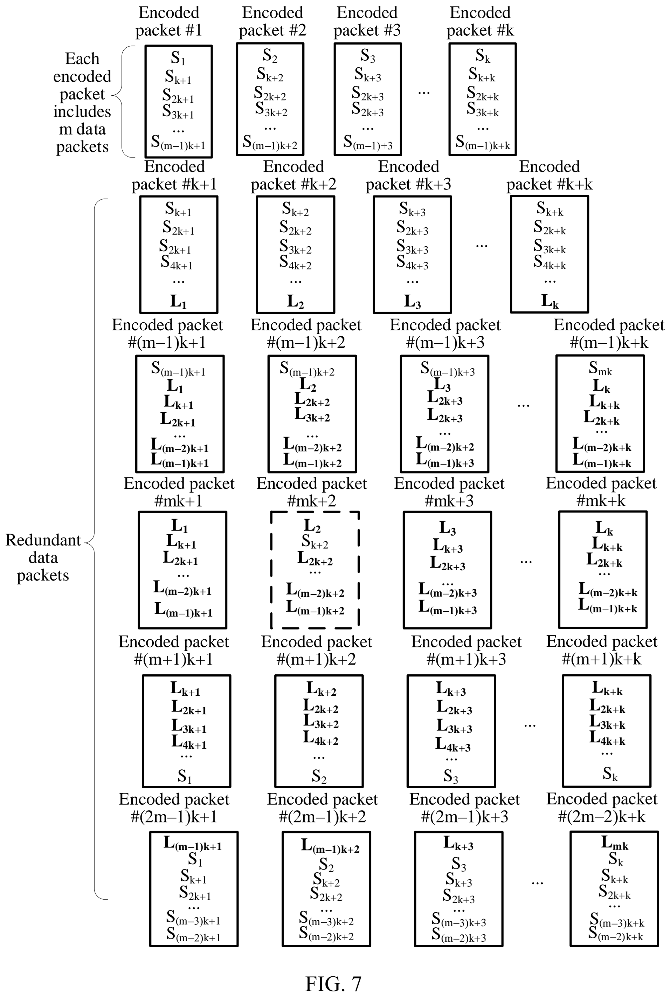

It is assumed that the code rate is an even number, for example, the code rate is $\dfrac{1}{2m}$, and it is assumed that $N$ (that is, $mk$) original data packets are input in total, which are respectively denoted as $S_1, S_2, S_3, ..., S_{mk}$. In this case, it is determined, based on the code rate and the quantity of original data packets, that $2mk$ encoded data packets (a total quantity of data packets is $2m \cdot k \cdot m$) may be generated in total. Specifically, FIG. 7 shows data packets that may be included in each encoded data packet. As shown in FIG. 7, there are three types of encoded data packets. First-type encoded data packets are the first k encoded data packets, and the $k$ encoded data packets all are pure original data packets. Second-type encoded data packets are a $(k+1)^{th}$ encoded data packet to an $mk^{th}$ encoded data packet and an $(m+1)k^{th}$ encoded data packet to a $2mk^{th}$ encoded data packet, and these encoded data packets include both a pure original data packet and an $L$-packet. Third-type encoded data packets include only $L$-packets, for example, an $(mk+1)^{th}$ encoded data packet and an $(mk+2)^{th}$ encoded data packet.

The first $k$ encoded data packets in the encoded data packets in FIG. 7 all are pure original data packets, and the first $k$ encoded data packets in FIG. 7 are similar to the first $k$ encoded data packets in FIG. 6, and all are original data packets. The $(k+1)^{th}$ encoded data packet to the $mk^{th}$ encoded data packet are similar to corresponding encoded data packets in FIG. 6, and the $(m+1)k^{th}$ encoded data packet to the $2mk^{th}$ encoded data packet and the $(mk+2)^{th}$ encoded data packet are similar to the $(mk+1)^{th}$ encoded data packet to the $(2m-1)k^{th}$ encoded data packet in FIG. 6. A difference from FIG. 6 is that, in Case 2, the third-type encoded data packets are further included, and this type of encoded data packets include the $L$-packets, for example, the $(mk+1)^{th}$ encoded data packet and the $(mk+2)^{th}$ encoded data packet.

Each encoded data packet shown in FIG. 7 may alternatively be represented by a mask (mask) table. Generally, the mask table is attached to a packet header of each packet. In this case, a structure of the encoded data packet in FIG. 7 may be converted into a form of a mask table for representation. Matrix (3) to Matrix (6) below all are matrices with $m$ rows and $mk$ columns. It may be understood that the matrix includes $m$ row vectors $e_t$, where $e_t = e_{ik+j}$, and $1 \le ik+j \le mk$. In the row vectors, only one element is "1", and the other elements all are "0". Matrix (3) may represent any one of the first $mk$ encoded data packets. Matrix (4) and Matrix (5) may represent any one of the $(mk+1)^{th}$ encoded data packet to the $(m+1)k^{th}$ encoded data packet. Matrix (6) represents any one of an $((m+1)k+1)^{th}$ encoded data packet to the $2mk^{th}$ encoded data packet.

(1) A mask table of a $(t=ik+j)^{th}$ encoded data packet is shown by Matrix (3) below. In Matrix (1), $0 \le i \le m-1$, and $1 \le j \le k$. It may also be understood that the first mk encoded data packets in FIG. 7 may be represented by Matrix (3) below.

$$M_{ik+j} = \begin{bmatrix} e_{ik+j} \\ e_{(i+1)k+j} \\ e_{(i+2)k+j} \\ \dots \\ e_{(m-1)k+j} \\ e_{0k+j} \\ e_{k+j} + e_{k+j+1} \\ e_{2k+j} + e_{2k+j+1} \\ \dots \\ e_{(i-1)k+j} + e_{(i-1)k+j+1} \end{bmatrix} \qquad \text{Matrix (3)}$$

(2) A mask table of a $(t=ik+j)^{th}$ encoded data packet is shown by Matrix (4) and Matrix (5) below, where $1 \le j \le k$.

Specifically, in Matrix (4), a case of $j \ne 2$ is described, and in Matrix (5), a case of $j = 2$ is described. It may also be understood that the $(mk+2)^{th}$ encoded data packet in FIG. 7 may be represented by Matrix (5) below, and the $(mk+1)^{th}$ encoded data packet to the $(m+1)k^{th}$ encoded data packet except the $(mk+2)^{th}$ encoded data packet may be represented by Matrix (4) below.

$$M_{ik+j} = \begin{bmatrix} e_{0k+j} + e_{0k+j+1} \\ e_{k+j} + e_{k+j+1} \\ e_{2k+j} + e_{2k+j+1} \\ e_{3k+j} + e_{3k+j+1} \\ \cdots \\ e_{(m-1)k+j} + e_{(m-1)k+j+1} \end{bmatrix} \quad j \neq 2 \qquad \text{Matrix (4)}$$

$$M_{ik+j} = \begin{bmatrix} e_j + e_{j+1} \\ e_{k+j} \\ e_{2k+j} + e_{2k+j+1} \\ e_{3k+j} + e_{3k+j+1} \\ \cdots \\ e_{(m-1)k+j} + e_{(m-1)k+j+1} \end{bmatrix} \quad j = 2 \qquad \text{Matrix (5)}$$

.

(3) A mask table of a (t=ik+j)$^{th}$ encoded data packet is shown by Matrix (6) below, where $m \leq i \leq 2m$-1, and $1 \leq j \leq k$. It may also be understood that the $((m+1)k+1)^{th}$ encoded data packet to the $2mk^{th}$ encoded data packet in FIG. 7 may be represented by Matrix (6) below.

$$M_{ik+j} = \begin{bmatrix} e_{(i-m)k+j} + e_{(i-m)k+j+1} \\ e_{(i-m+1)k+j} + e_{(i-m+1)k+j+1} \\ e_{(i-m+2)k+j} + e_{(i-m+2)k+j+1} \\ \cdots \\ e_{(m-1)k+j} + e_{(m-1)k+j+1} \\ e_{0k+j} \\ e_{k+j} \\ e_{2k+j} \\ \cdots \\ e_{(i-m-1)k+j} \end{bmatrix} \qquad \text{Matrix (6)}$$

Case 3:

For a case in which the RED coding method is combined with the solution of this application, for a form of a mask matrix, refer to Case 1 or Case 2 above for understanding. Details are not described again.

502: Send the plurality of encoded data packets.

In this application, the encoded data packets may be sent in a network according to a sequence of the encoded data packets. For example, in Case 1, the first k first-type encoded data packets may be first sent, and then the following second-type encoded data packets are sent. For another example, in Case 2, the k first-type encoded data packets may be first sent, and then the following second-type encoded data packets and third-type encoded data packets are sent.

Specifically, a packet header of each of the plurality of encoded data packets carries a mask table, and the mask table indicates a type of each encoded data packet.

Step 503: Receive the plurality of encoded data packets.

In this application, a receiving end may receive the plurality of encoded data packets sent by a transmitting end.

In a possible implementation, the packet header of each of the plurality of encoded data packets carries the mask table, and the mask table indicates the type of each encoded data packet.

The receiving end may determine, based on the mask table carried in the packet header of each received encoded data packet, whether the encoded data packet is a first-type encoded data packet or a second-type encoded data packet. The first-type encoded data packet includes a plurality of original data packets, and the second-type encoded data packet includes a first-type redundant data packet and a second-type redundant data packet. The first-type redundant data packet includes one original data packet, and the second-type redundant data packet is determined by performing an algebraic operation on the plurality of original data packets.

Specifically, for a form of a mask table of each type of encoded data packet, refer to the descriptions in step 501. Details are not described again.

Step 504: Decode the plurality of encoded data packets to obtain the plurality of original data packets.

In this application, the packet header of each sent encoded data packet carries the mask (mask) table, and the mask table may indicate whether each sent encoded packet is a first-type encoded packet or a second-type encoded packet, to assist the receiving end in decoding different types of received encoded data packets.

For example, the receiving end may decode the received second-type redundant data packet based on the first-type encoded data packet and the first-type redundant data packet, to obtain more original data packets. In this way, when a network status is poor, an original data packet that is lost in the network in a process of sending an encoded data packet may be obtained by decoding the second-type redundant data packet. In other words, based on the method provided in this application, the receiving end can recover the original data packet.

In this application, the "transmitting end" may be understood as an "encoder side", and the "receiving end" may be understood as a "decoder side". For example, 501 and 502 in the method 500 may be understood as actions performed by the encoder side, and 503 and 504 in the method 500 may be understood as actions performed by the decoder side.

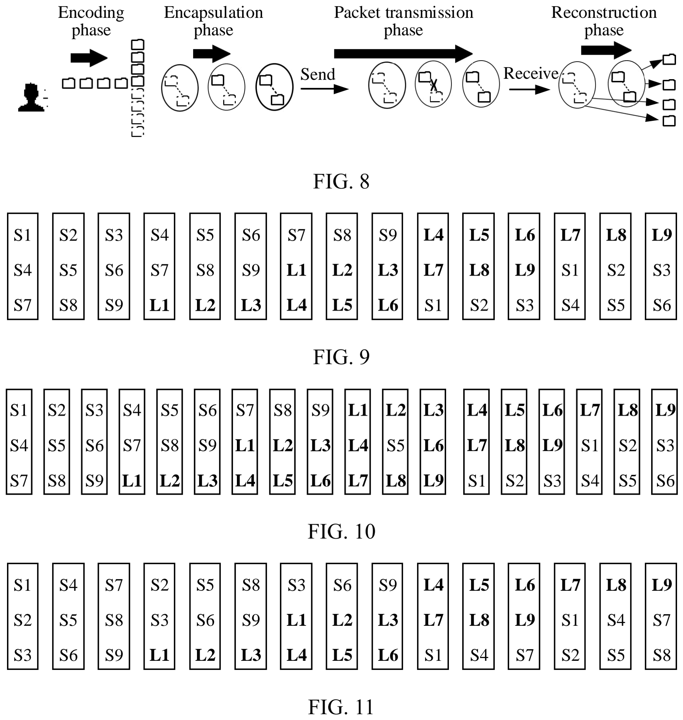

FIG. 8 is a schematic flowchart of a coding method according to this application. As shown in FIG. 8, to cope with packet loss in a transmission process, when a user generates an original data packet, the original data packet may be encoded to generate a redundant data packet, then a plurality of small packets are encapsulated to generate a new encoded data packet (that is, encapsulated into an encoded large packet), and finally the encapsulated encoded large packet is sent. When packet loss occurs at a receiving end, an original data packet (a data packet shown by a solid line in FIG. 8) and/or a redundant data packet (a data packet shown by a dashed line in FIG. 8) may be read from a received encoded data packets to perform FEC decoding, so as to recover a lost data packet, thereby maintaining reliability of an audio transmission system.

To further understand the three cases described in the foregoing method 500 in this application, the following provides descriptions by using specific examples.

Example 1:

For Case 1 in the method 500, in this example, it is assumed that m=3, k=3, and the code rate is $\frac{1}{5}$. It can be learned from the foregoing formula that $L_i = S_{(i-1 \bmod 9)+1} + S_{(i \bmod 9)+9}, 1 \leq 1 \leq 9$, and in this example, $L_i$ is a dual modular redundant data packet. FIG. 9 shows a structure of an encoded data packet. As shown in FIG. 9, the first three encoded data packets each include a pure original data packet, that is, a first-type encoded data packet; and each of the following 12 encoded data packets includes both a first-type redundant data packet and a second-type redundant data packet, that is, a second-type encoded data packet. The encoding structure shown in FIG. 9 has a strongest continuous packet loss concealment capability. To be specific, all original data packets, namely, $S_1 \sim S_9$, can be recovered by receiving any three consecutive encoded data packets (including encoded data packets connected end to end), which may also be understood as that loss of 12 consecutive data packets can be withstood.

The random packet loss concealment capability of the encoding structure shown in FIG. 9 may be further tested. A test roadmap is as follows: It is assumed that each encoded data packet is lost with a probability $p$, all last received encoded data packets are decoded, and then a ratio of original data packets that cannot be recovered after decoding is calculated. The preceding process is repeated one million times. Table 1 below shows a ratio of data packets that cannot be recovered after data packet reconstruction is performed for the RED code and the coding method provided in this application at different packet loss rates $p$ at redundancy of 400%. It can be learned from Table 1 that, when the packet loss rate is $p \leq 40\%$, according to the coding method provided in this application, it is detected that the ratio of data packets that cannot be recovered after data packet reconstruction is reduced by one order of magnitude; and when the packet loss rate is $p > 40\%$, the ratio of data packets that cannot be recovered after reconstruction is also significantly reduced. In this application, "reconstruction" may also be understood as a process in which the decoder side decodes an encoded data packet to obtain an original data packet.

Table 1

| Packet loss rate $p$ Technical solution | 20% | 30% | 40% | 50% | 60% | 70% | 80% |
|---|---|---|---|---|---|---|---|
| RED solution | 3.06e-4 | 2.40e-3 | 1.02% | 3.11% | 7.77% | 16.8% | 32.7% |
| Solution in this application | 1.23e-4 | 2.38e-4 | 1.87e-3 | 1.02% | 4.05% | 12.7% | 32.2% |

In this example, a process of generating a redundant data packet is based only on a finite-field exclusive OR operation, and does not involve a finite-field multiplication operation. Therefore, encoding and decoding processes are simple and less complex. In addition, small packets (including an original data packet and a redundant data packet generated by performing an algebraic operation on a plurality of original data packets) may be encapsulated into a large encoded data packet, so that header overheads can be effectively reduced, and network bandwidth occupation is reduced. In addition, encoded data packets are sequentially sent in a network based on the encoding structure designed in this example, so that a strongest continuous packet loss concealment capability can be achieved. For example, in this example, a maximum of 12 consecutive data packets in 15 sent encoded data packets may be allowed to be lost. In other words, all data packets can be reconstructed as long as only three encoded data packets in the 15 encoded data packets are received. In addition, it can be learned from Table 1 that under same data redundancy, a random packet loss concealment capability of the coding scheme provided in this application has a more obvious gain compared with the RED code.

Example 2:

For Case 2 in the method 500, in this example, it is assumed that m=3, k=3, and the code rate is $\frac{1}{6}$ . It can be learned from the foregoing formula that $L_i = S_{(i-1 \bmod 9)+1} + S_{(i \bmod 9)+9}$, $1 \le 1 \le 9$, and in this example, $L_i$ is a dual modular redundant data packet. FIG. 10 shows a structure of an encoded data packet. As shown in FIG. 10, the first three encoded data packets each include a pure original data packet, that is, a first-type encoded data packet; each of 13 encoded data packets includes both a first-type redundant data packet and a second-type redundant data packet, that is, a second-type encoded data packet; and two encoded data packets each include a second-type redundant data packet, that is, a third-type encoded data packet. The encoding structure shown in FIG. 10 has a strongest continuous packet loss concealment capability. To be specific, all original data packets, namely, $S_1 \sim S_9$ , can be recovered by receiving any three consecutive encoded data packets (including encoded data packets connected end to end), which may also be understood as that loss of 15 consecutive data packets can be withstood.

A random packet loss concealment capability of the encoding structure shown in FIG. 10 may be further tested. A test roadmap is as follows: It is assumed that each encoded data packet is lost with a probability $p$ , all last received encoded data packets are decoded, and a ratio of original data packets that cannot be recovered after decoding is calculated. The preceding process is repeated one million times. Table 2 below shows a ratio of data packets that cannot be recovered after data packet reconstruction is performed for the RED code and the coding method provided in this application at different packet loss rates $p$ at redundancy of 500%. It can be learned from Table 2 that, when the packet loss rate is $p \le 50\%$, it is detected according to the coding method provided in this application that the ratio of data packets that cannot be recovered after data packet reconstruction is reduced by one order of magnitude; and when the packet loss rate is $p > 50\%$, the ratio of data packets that cannot be recovered after reconstruction is also significantly reduced.

Table 2

| Packet loss rate $p$ Technical solution | 20% | 30% | 40% | 50% | 60% | 70% | 80% |
|---|---|---|---|---|---|---|---|
| RED solution | 9.04e-5 | 9.22e-4 | 4.79e-3 | 1.74% | 5.01% | 12.3% | 26.9% |
| Solution in this application | 1.11e-6 | 2.19e-5 | 3.62e-4 | 3.13e-3 | 1.77% | 7.66% | 24.8% |

In this example, a process of generating a redundant data packet is based only on a finite-field exclusive OR operation, and does not involve a finite-field multiplication operation. Therefore, encoding and decoding processes are simple and less complex. In addition, small packets (including an original data packet and a redundant data packet generated by performing an algebraic operation on a plurality of original data packets) may be encapsulated into a large encoded data packet, so that header overheads can be effectively reduced, and network bandwidth occupation is reduced. In addition, encoded data packets are sequentially sent in a network based on the encoding structure designed in this example, so that a strongest continuous packet loss concealment capability can be achieved. For example, in this example, a maximum of 15 consecutive data packets in 18 sent encoded data packets may be allowed to be lost. In other words, all data packets can be reconstructed as long as only three encoded data packets in the 18 encoded data packets are received. In addition, it can be learned from Table 2 that under same data redundancy, a random packet loss concealment capability of the coding scheme provided in this application has a more obvious gain compared with the RED code.

Example 3:

In consideration of a delay problem, the technical solution of this application may be further optimized. It can be found from FIG. 9 or FIG. 10 that each of the first three encoded data packets can be sent only after a related original data packet is completely received. In other words, the first three encoded data packets cannot be sent in real time. For example, in the encoded data packets shown in FIG. 9, a $1^{st}$ encoded data packet includes original data packets $S_1$, $S_4$, $S_7$, and therefore the $1^{st}$ encoded data packet can be sent only after the original data packets $S_1$, $S_4$, $S_7$ are completely received; a $2^{nd}$ encoded data packet includes original data packets $S_2$, $S_5$, $S_8$, and therefore the $2^{nd}$ encoded data packet can be sent only after the original data packets $S_2$, $S_5$, $S_8$ are completely received; and this is true for a $3^{rd}$ encoded data packet. In this way, each of the first three encoded data packets can be sent only after a corresponding encoded data packet is completely received, causing a large delay. However, according to the RED coding technical solution shown in FIG. 4, it can be learned that, in the RED solution, a $1^{st}$ encoded data packet includes an original data packet $S_1$, a $2^{nd}$ encoded data packet includes original data packets $S_1$, $S_2$, a $3^{rd}$ encoded data packet includes original data packets $S_1$, $S_2$, $S_3$, and so on. It can be found that, in the RED solution, each encoded data packet in the RED solution does not need to wait for a following original data packet. Therefore, a delay in the RED solution is small.

To resolve a problem that a delay of the encoding structures shown in FIG. 9 and FIG. 10 in this application is large, the RED solution may be selected to be combined with the coding method provided in this application. In an early stage of data packet generation, there are fewer data blocks, and the RED solution may be selected for encoding first; and in middle and later stages, when there are sufficient data blocks, the coding method provided in this application may be used. This can resolve a problem of real-time sending, and can effectively improve coding efficiency.

It should be noted that the encoding structures shown in FIG. 9 and FIG. 10 in this application are merely examples. For example, FIG. 11 may be a variation of FIG. 9. It can be learned that original data included in each encoded data packet in FIG. 11 is different from an original data packet included in each encoded data packet in FIG. 9. In FIG. 11, $L_i$ is still a dual modular redundant data packet, but a plurality of original data packets included in $L_i$ in FIG. 11 are different from a plurality of original data packets included in $L_i$ in FIG. 9.

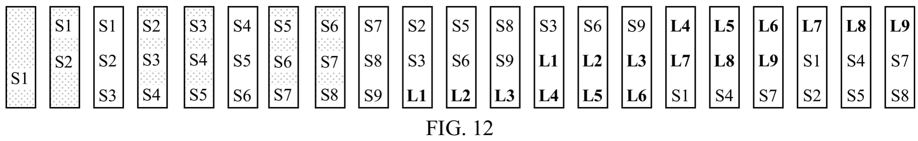

FIG. 12 shows a coding method combining a RED solution and a solution of this application. Compared with the method in FIG. 9, in the coding scheme shown in FIG. 12, the first two encoded data packets may be sent in real time without waiting for a following original data packet, and a $4^{th}$ encoded data packet, a $5^{th}$ encoded data packet, a $7^{th}$ encoded data packet, and an $8^{th}$ encoded data packet may be sent in real time without waiting for a following data packet. Therefore, the coding scheme shown in FIG. 12 resolves a delay problem, and each encoded data packet can be generated and sent in real time. Certainly, the combination of the two coding schemes inevitably sacrifices a code rate. However, a code rate in the coding method shown in FIG. 12 is still higher than a code rate of the RED code. Therefore, for a delay-sensitive scenario, the coding method shown in FIG. 12 may be used.

In this example, a process of generating a redundant data packet is based only on a finite-field exclusive OR operation, and does not involve a finite-field multiplication operation. Therefore, encoding and decoding processes are simple and less complex. In addition, small packets (including an original data packet and a redundant data packet generated by performing an algebraic operation on a plurality of original data packets) may be encapsulated into a large encoded data packet, so that header overheads can be effectively reduced, and network bandwidth occupation is reduced. In addition, according to the encoding structure designed in this example, an encoded data packet can be sent in real time without a wait, thereby reducing a delay and improving user experience. In addition, a continuous packet loss concealment capability of the coding method is significantly higher than that of the RED solution, and a maximum of 12 encoded data packets in 21 encoded data packets may be allowed to be continuously lost. In addition, random packet loss concealment performance is also obviously better than that of the RED solution.

It may be understood that a term "and/or" in this specification describes only an association relationship between associated objects and represents that three relationships may exist. For example, A and/or B may represent the following three cases: Only A exists, both A and B exist, and only B exists. In addition, a character "/" in this specification generally indicates an "or" relationship between the associated objects.

A person skilled in the art may be aware that, in combination with units and algorithm steps of the examples described in embodiments disclosed in this specification, this application may be implemented by using hardware or a combination of hardware and computer software. Whether a function is performed by using hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, a computing device may be divided into functional modules based on the foregoing method examples. For example, each functional module corresponding to each function may be obtained through division, or two or more functions may be integrated into one processing module. The integrated module may be implemented in a form of hardware, or may be implemented in a form of a software functional module. It should be noted that, in embodiments of this application, division into modules is an example, and is merely logical function division. During actual implementation, another division manner may be used. An example in which each functional module is obtained through division based on each corresponding function is used below for description.

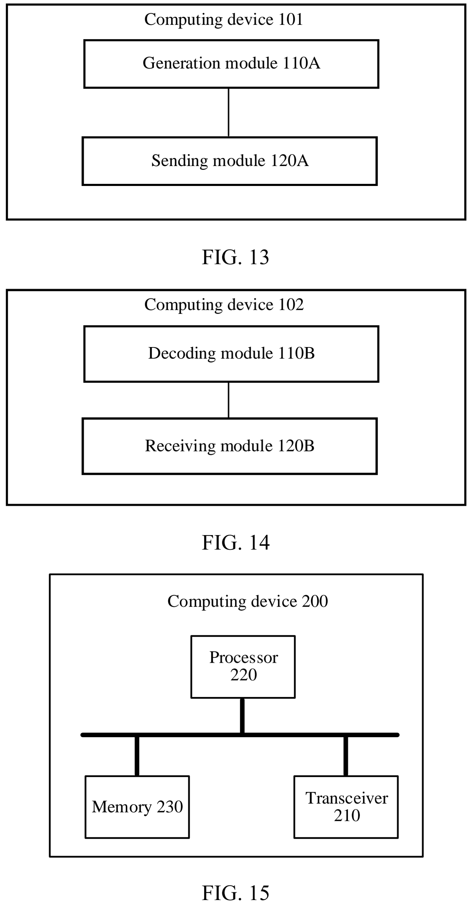

FIG. 13 is a block diagram of a computing device 101 according to an embodiment of this application. As shown in FIG. 13, the computing device 101 may include a generation module 110A and a sending module 120A.

The foregoing modules are respectively configured to perform steps 501 and 502 in the foregoing coding method 500, and details are not described herein again.

FIG. 14 is a block diagram of a computing device 102 according to an embodiment of this application. As shown in FIG. 14, the computing device 102 may include a decoding module 110B and a receiving module 120B.

The foregoing modules are respectively configured to perform steps 503 and 504 in the foregoing coding method 500, and details are not described herein again.

It should be further understood that the computing devices 101 and 102 herein are embodied in a form of a functional unit. A term "unit" herein may mean an application-specific integrated circuit (application specific integrated circuit, ASIC), an electronic circuit, a processor (for example, a shared processor, a special-purpose processor, or a group processor) configured to execute one or more software or firmware programs, a memory, a merged logic circuit, and/or another appropriate component that supports the described functions.

The computing devices 101 and 102 in the foregoing solutions have functions of implementing corresponding steps in the foregoing method 500. The functions may be implemented by hardware, or may be implemented by hardware executing corresponding software. The hardware or software includes one or more modules corresponding to the foregoing functions. For example, a determining unit may be replaced with a processor, to separately perform receiving and sending operations and related processing operations in each method embodiment. In addition, the determining unit may be a processing circuit.

It should be noted that the computing device in FIG. 13 or FIG. 14 may be the computing device in the foregoing method embodiment, or may be a chip or a chip system of the computing device, for example, a system on chip (system on chip, SoC). The processing unit is a processor, a microprocessor, or an integrated circuit integrated on the chip. This is not limited herein.

FIG. 15 is a block diagram of another computing device 200 according to an embodiment of this application. As shown in the figure, the device 200 includes at least one processor 220. The processor 220 is coupled to a memory, and is configured to execute instructions stored in the memory, to send a signal and/or receive a signal. Optionally, the device 200 further includes a memory 230, configured to store instructions. Optionally, the device 200 further includes a transceiver 210, and the processor 220 controls the transceiver 210 to send a signal and/or receive a signal.

It should be understood that the processor 220 and the memory 230 may be integrated into one processing device. The processor 220 is configured to execute program code stored in the memory 230, to implement the foregoing functions. During specific implementation, the memory 230 may alternatively be integrated into the processor 220, or may be independent of the processor 220.

It should be further understood that the transceiver 210 may include a transceiver (or referred to as a receiver machine) and a transmitter (or referred to as a transmitter machine). The transceiver may further include an antenna. There may be one or more antennas. The transceiver 210 may alternatively be a communication interface or an interface circuit.

Specifically, the processor 220 in the device 200 may correspond to the generation module 110A in the computing device 101. The transceiver 210 in the device 200 may correspond to the sending module 120A in the computing device 101.

In a solution, the computing device 200 is configured to implement 501 and 502 in the embodiment of the foregoing method 500.

For example, the processor 220 is configured to execute a computer program or instructions stored in the memory 230, to implement 501 and 502 in the foregoing method 500.

Specifically, the processor 220 in the device 200 may correspond to the decoding module 110B in the computing device 102, and the transceiver 210 in the device 200 may correspond to the receiving module 120B in the computing device 102.

In a solution, the computing device 200 is configured to implement 503 and 504 in the embodiment of the foregoing method 500.

For example, the processor 220 is configured to execute a computer program or instructions stored in the memory 230, to implement 503 and 504 in the foregoing method 500.

It should be noted that the computing device provided in this application may alternatively be a computing device deployed on a cloud, for example, a server or a virtual machine in a cloud system.

According to the methods provided in embodiments of this application, this application further provides a computer program product. The computer program product stores computer program code. When the computer program code is run on a computer, the computer is enabled to perform 501 and 502 in the embodiment of the method 500, or the computer is enabled to perform 503 and 504 in the embodiment of the method 500.

According to the methods provided in embodiments of this application, this application further provides a computer-readable medium. The computer-readable medium stores program code. When the program code is run on a computer, the computer is enabled to perform 501 and 502 in the embodiment of the method 500, or the computer is enabled to perform 503 and 504 in the embodiment of the method 500.

For interpretations and beneficial effects of the related content in any one of the devices provided above, refer to the corresponding method embodiment provided above. Details are not described herein again.

It should be understood that specific processes in which the transceiver and the processor perform the foregoing corresponding steps are described in detail in the foregoing method embodiments. For brevity, details are not described herein again.

In an implementation process, steps of the foregoing methods can be implemented by using a hardware integrated logic circuit in the processor, or by using instructions in a form of software. The steps of the methods disclosed with reference to embodiments of this application may be directly performed by a hardware processor, or may be performed by using a combination of hardware in the processor and a software module. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor. To avoid repetition, details are not described herein again.

It should be noted that the processor in embodiments of this application may be an integrated circuit chip, and has a signal processing capability. In an implementation process, steps of the foregoing method embodiments can be implemented by using a hardware integrated logic circuit in the processor, or by using instructions in a form of software. The foregoing processor may be a general-purpose processor, a digital signal processor (digital signal processor, DSP), an application-specific integrated circuit (application-specific integrated circuit, ASIC), a field programmable gate array (field-programmable gate array, FPGA) or another programmable logic device, a discrete gate or transistor logic device, or a discrete hardware component. The methods, the steps, and the logical block diagrams that are disclosed in embodiments of this application may be implemented or performed. The general-purpose processor may be a microprocessor, or the processor may be any conventional processor or the like. The steps of the methods disclosed with reference to embodiments of this application may be directly performed by a hardware decoding processor, or may be performed by using a combination of hardware in a decoding processor and a software module. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

All or some of the foregoing embodiments may be implemented by using software, hardware, firmware, or any combination thereof. When software is used for implementation, all or some of embodiments may be implemented in a form of a computer program product. The computer program product includes one or more computer instructions. When the computer instructions are loaded and executed on a computer, all or some of the procedures or functions according to embodiments of this application are generated. The computer may be a general-purpose computer, a special-purpose computer, a computer network, or another programmable device. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk drive, or a magnetic tape), an optical medium (for example, a high-density digital video disc (digital video disc, DVD)), a semiconductor medium (for example, a solid-state drive (solid state disc, SSD)), or the like.

In the foregoing device embodiments, corresponding modules or units perform corresponding steps. For example, the transceiver unit (transceiver) performs a receiving or sending step in the method embodiments, and the processing unit (processor) may perform a step other than the sending and receiving steps. For a function of a specific unit, refer to a corresponding method embodiment. There may be one or more processors.

Terms such as "component", "module", and "system" used in this specification indicate computer-related entities, hardware, firmware, combinations of hardware and software, software, or software being executed. For example, a component may be but is not limited to a process that runs on a processor, a processor, an object, an executable file, an execution thread, a program, and/or a computer. As illustrated by using figures, both a computing device and an application that runs on the computing device may be components. One or more components may reside within a process and/or an execution thread, and a component may be located on one computer and/or distributed between two or more computers. In addition, these components may be executed from various computer-readable media that store various data structures. For example, the components may communicate by using a local and/or remote process and based on, for example, a signal having one or more data packets (for example, data from two components interacting with another component in a local system, a distributed system, and/or across a network such as the internet interacting with other systems by using the signal).

A person of ordinary skill in the art may be aware that, in combination with the examples described in embodiments disclosed in this specification, units and algorithm steps may be implemented by using electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, device, and unit, refer to a corresponding process in the foregoing method embodiments. Details are not described herein again.

In several embodiments provided in this application, it should be understood that the disclosed system, device, and method may be implemented in other manners. For example, the described device embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the devices or units may be implemented in electronic, mechanical, or other forms.

The units described as separate parts may or may not be physically separate, and parts displayed as units may or may not be physical units, that is, may be located in one place, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. An encoding method, comprising:

   generating a plurality of encoded data packets based on a plurality of original data packets, wherein the plurality of encoded data packets comprise a first-type encoded data packet and a second-type encoded data packet, the first-type encoded data packet is determined based on the plurality of original data packets, the second-type encoded data packet is determined based on a first-type redundant data packet and a second-type redundant data packet, the first-type redundant data packet is determined based on one original data packet, and the second-type redundant data packet is determined by performing an operation on the plurality of original data packets; and

sending the plurality of encoded data packets.

2. The method according to claim 1, wherein the second-type redundant data packet is determined by performing a modulo 2 addition operation on the plurality of original data packets.

3. The method according to claim 1 or 2, wherein a code rate of the plurality of encoded data packets is Q2/Q1, and a quantity of original data packets is N; and
generating the plurality of encoded data packets based on the plurality of original data packets comprises:

encapsulating the N original data packets into K first-type encoded data packets, wherein each first-type encoded data packet comprises N/K different original data packets; and
determining a quantity of second-type encoded data packets based on the quantity of original data packets, the code rate, and the quantity of first-type encoded data packets, wherein the quantity of second-type encoded data packets is [K÷(Q2/Q1)-K], and a quantity of first-type redundant data packets and second-type redundant data packets comprised in each second-type encoded data packet is N/K, wherein
both Q1 and Q2 are integers greater than 0, Q1 is greater than Q2, both N and K are integers greater than or equal to 2, and N is greater than or equal to K.

4. The method according to any one of claims 1 to 3, wherein the plurality of encoded data packets further comprise a third-type encoded data packet, and the third-type encoded data packet is determined based on the second-type redundant data packet.

5. The method according to claim 4, wherein the code rate of the plurality of encoded data packets is L2/L1, and the quantity of original data packets is N; and
generating the plurality of encoded data packets based on the plurality of original data packets comprises:

encapsulating the N original data packets into the K first-type encoded data packets, wherein each first-type encoded data packet comprises the N/K different original data packets; and
determining the quantity of second-type encoded data packets and a quantity of third-type encoded data packets based on the quantity of original data packets, the code rate, and the quantity of first-type encoded data packets, wherein the quantity of third-type encoded data packets is (K-1), the quantity of second-type encoded data packets is [K÷(L2/L1)-K-(K-1)], the quantity of first-type redundant data packets and second-type redundant data packets comprised in each second-type encoded data packet is N/K, and second-type redundant data packets comprised in each third-type encoded data packet is N/K, wherein
both L1 and L2 are integers greater than 0, L1 is greater than L2, both N and K are integers greater than or equal to 2, and N is greater than or equal to K.

6. The method according to any one of claims 1 to 3, wherein the quantity of original data packets is P, and the code rate of the plurality of encoded data packets is R2/R1; and
generating the plurality of encoded data packets based on the plurality of original data packets comprises:

generating P first-type encoded data packets according to a redundant audio data RED coding method and the quantity of original data packets; and
determining the quantity of second-type encoded data packets based on the quantity of original data packets, the code rate, and the quantity of first-type encoded data packets, wherein the quantity of second-type encoded data packets is [(P/m)÷(R2/R1)-P], and the quantity of first-type redundant data packets and second-type redundant data packets comprised in each second-type encoded data packet is P/m, wherein
both R1 and R2 are integers greater than 0, R1 is greater than R2, P is an integer greater than or equal to 2, and P is greater than or equal to m.

7. The method according to claim 4 or 5, wherein the quantity of original data packets is P, and the code rate of the plurality of encoded data packets is R2/R1; and
generating the plurality of encoded data packets based on the plurality of original data packets comprises:

generating P first-type encoded data packets according to a redundant audio data RED coding method and the quantity of original data packets; and

determining the quantity of second-type encoded data packets and the quantity of third-type encoded data packets based on the quantity of original data packets, the code rate, and the quantity of first-type encoded data packets, wherein the quantity of third-type encoded data packets is (P-1), the quantity of second-type encoded data packets is $[(P/m) \div (R2/R1)-P-(P-1)]$, the quantity of first-type redundant data packets and second-type redundant data packets comprised in each second-type encoded data packet is P/m, and the quantity of second-type redundant data packets comprised in each third-type encoded data packet is P/m, wherein

both R1 and R2 are integers greater than 0, R1 is greater than R2, P is an integer greater than or equal to 2, and P is greater than or equal to m.

8. The method according to any one of claims 1 to 7, wherein a packet header of each of the plurality of encoded data packets carries a mask table, and the mask table indicates a type of each encoded data packet.

9. A decoding method, comprising:

receiving a plurality of encoded data packets, wherein the plurality of encoded data packets comprise a first-type encoded data packet and a second-type encoded data packet, the first-type encoded data packet is determined based on a plurality of original data packets, the second-type encoded data packet is determined based on a first-type redundant data packet and a second-type redundant data packet, the first-type redundant data packet is determined based on one original data packet, and the second-type redundant data packet is determined by performing an operation on the plurality of original data packets; and

decoding the plurality of encoded data packets to obtain the plurality of original data packets.

10. The method according to claim 9, wherein the second-type redundant data packet is determined by performing a modulo 2 addition operation on the plurality of original data packets.

11. The method according to claim 9 or 10, wherein the plurality of encoded data packets further comprise a third-type encoded data packet, and the third-type encoded data packet comprises the second-type redundant data packet.

12. The method according to any one of claims 9 to 11, wherein a packet header of each of the plurality of encoded data packets carries a mask table, and the mask table indicates a type of each encoded data packet.

13. A computing device, comprising a generation module and a sending module, wherein the generation module is configured to generate a plurality of encoded data packets based on a plurality of original data packets, wherein the plurality of encoded data packets comprise a first-type encoded data packet and a second-type encoded data packet, the first-type encoded data packet is determined based on the plurality of original data packets, the second-type encoded data packet is determined based on a first-type redundant data packet and a second-type redundant data packet, the first-type redundant data packet is determined based on one original data packet, and the second-type redundant data packet is determined by performing an operation on the plurality of original data packets; and

the sending module is configured to send the plurality of encoded data packets.

14. The computing device according to claim 12, wherein the second-type redundant data packet is determined by performing a modulo 2 addition operation on the plurality of original data packets.

15. The computing device according to claim 13 or 14, wherein a code rate of the plurality of encoded data packets is Q2/Q1, and a quantity of original data packets is N; and

that the generation module is configured to generate the plurality of encoded data packets based on the plurality of original data packets comprises:

the generation module is configured to encapsulate the N original data packets into K first-type encoded data packets, wherein each first-type encoded data packet comprises N/K different original data packets; and

the generation module is configured to determine a quantity of second-type encoded data packets based on the quantity of original data packets, the code rate, and the quantity of first-type encoded data packets, wherein the quantity of second-type encoded data packets is $[K \div (Q2/Q1)-K]$, and a quantity of first-type redundant data packets and second-type redundant data packets comprised in each second-type encoded data packet is N/K, wherein

both Q1 and Q2 are integers greater than 0, Q1 is greater than Q2, both N and K are integers greater than or equal to 2, and N is greater than or equal to K.

16. The computing device according to any one of claims 13 to 15, wherein the plurality of encoded data packets further comprise a third-type encoded data packet, and the third-type encoded data packet is determined based on the second-type redundant data packet.

17. The computing device according to claim 16, wherein the code rate of the plurality of encoded data packets is L2/L1, and the quantity of original data packets is N; and
that the generation module is configured to generate the plurality of encoded data packets based on the plurality of original data packets comprises:

    the generation module is configured to encapsulate the N original data packets into the K first-type encoded data packets, wherein each first-type encoded data packet comprises the N/K different original data packets; and
    the generation module is configured to determine the quantity of second-type encoded data packets and a quantity of third-type encoded data packets based on the quantity of original data packets, the code rate, and the quantity of first-type encoded data packets, wherein the quantity of third-type encoded data packets is (K-1), the quantity of second-type encoded data packets is [K÷(L2/L1)-K-(K-1)], a quantity of second-type redundant data packets comprised in each third-type encoded data packet is N/K, and the quantity of first-type redundant data packets and second-type redundant data packets comprised in each second-type encoded data packet is N/K, wherein
    both L1 and L2 are integers greater than 0, L1 is greater than L2, both N and K are integers greater than or equal to 2, and N is greater than or equal to K.

18. The computing device according to any one of claims 13 to 15, wherein the quantity of original data packets is P, and the code rate of the plurality of encoded data packets is R2/R1; and
that the generation module is configured to generate the plurality of encoded data packets based on the plurality of original data packets comprises:

    the generation module is configured to generate P first-type encoded data packets according to a redundant audio data RED coding method and the quantity of original data packets; and
    the generation module is configured to determine the quantity of second-type encoded data packets based on the quantity of original data packets, the code rate, and the quantity of first-type encoded data packets, wherein the quantity of second-type encoded data packets is [(P/m)÷(R2/R1)-P], and the quantity of first-type redundant data packets and second-type redundant data packets comprised in each second-type encoded data packet is P/m, wherein
    both R1 and R2 are integers greater than 0, R1 is greater than R2, P is an integer greater than or equal to 2, and P is greater than or equal to m.

19. The computing device according to claim 16 or 17, wherein the quantity of original data packets is P, and the code rate of the plurality of encoded data packets is R2/R1; and
that the generation module is configured to generate the plurality of encoded data packets based on the original data packets comprises:

    the generation module is configured to generate P first-type encoded data packets according to a redundant audio data RED coding method and the quantity of original data packets; and
    the generation module is configured to determine the quantity of second-type encoded data packets and the quantity of third-type encoded data packets based on the quantity of original data packets, the code rate, and the quantity of first-type encoded data packets, wherein the quantity of third-type encoded data packets is (P-1), the quantity of second-type encoded data packets is [(P/m)÷(R2/R1)-P-(P-1)], the quantity of first-type redundant data packets and second-type redundant data packets comprised in each second-type encoded data packet is P/m, and the quantity of second-type redundant data packets comprised in each third-type encoded data packet is P/m, wherein
    both R1 and R2 are integers greater than 0, R1 is greater than R2, P is an integer greater than or equal to 2, and P is greater than or equal to m.

20. The computing device according to any one of claims 13 to 19, wherein the plurality of encoded data packets further comprise the third-type encoded data packet, and the third-type encoded data packet comprises the second-type redundant data packet.

21. The computing device according to any one of claims 13 to 20, wherein a packet header of each of the plurality of encoded data packets carries a mask table, and the mask table indicates a type of each encoded data packet.

22. The computing device according to any one of claims 13 to 21, wherein the computing device is deployed on a cloud server of an artificial intelligence AI application.

23. A computing device, comprising a receiving module and a decoding module, wherein

    the receiving module is configured to receive a plurality of encoded data packets, wherein the plurality of encoded data packets comprise a first-type encoded data packet and a second-type encoded data packet, the first-type encoded data packet is determined based on a plurality of original data packets, the second-type encoded data packet is determined based on a first-type redundant data packet and a second-type redundant data packet, the first-type redundant data packet is determined based on one original data packet, and the second-type redundant data packet is determined by performing an operation on the plurality of original data packets; and
    the decoding module is configured to decode the plurality of encoded data packets to obtain the plurality of original data packets.

24. The computing device according to claim 23, wherein the second-type redundant data packet is determined by performing a modulo 2 addition operation on the plurality of original data packets.

25. The computing device according to claim 23 or 24, wherein the plurality of encoded data packets further comprise a third-type encoded data packet, and the third-type encoded data packet comprises the second-type redundant data packet.

26. The computing device according to any one of claims 23 to 25, wherein a packet header of each of the plurality of encoded data packets carries a mask table, and the mask table indicates a type of each encoded data packet.

27. The computing device according to any one of claims 23 to 26, wherein the computing device is deployed on a cloud server of an artificial intelligence AI application.

28. A computing device, comprising a processor and a memory, wherein the processor runs instructions in the memory, to enable the processor to perform the method according to any one of claims 1 to 8 or enable the processor to perform the method according to any one of claims 9 to 12.

29. A computing device cluster, comprising at least one computing device, wherein each computing device comprises a processor and a memory; and
    the processor of the at least one computing device is configured to execute instructions stored in the memory of the at least one computing device, so that the computing device cluster performs the method according to any one of claims 1 to 8 or the computing device cluster performs the method according to any one of claims 9 to 12.

30. A computer program product comprising instructions, wherein when the instructions are run by a computing device cluster, the computing device cluster is enabled to perform the method according to any one of claims 1 to 8, or the computing device cluster is enabled to perform the method according to any one of claims 9 to 12.

31. A computer-readable storage medium, comprising computer program instructions, wherein when the computer program instructions are executed by a computing device cluster, the computing device cluster is enabled to perform the method according to any one of claims 1 to 8, or the computing device cluster is enabled to perform the method according to any one of claims 9 to 12.

Uplink → Down-sampling → RTP packetization → FEC encoding ⇢ **Network transmission**

Downlink ← Up-sampling ← RTP depacketization ← FEC decoding ⇠

FIG. 1

| S1 | S2 | S3 |
|----|----|----|

| R1 | R2 | R3 |
|----|----|----|

FIG. 2

| S1 | S2 | S3 | S4 | S5 | S6 | S7 | S8 | S9 |
|----|----|----|----|----|----|----|----|----|

| R1 | R2 | R3 | R4 | R5 | R6 | R7 | R8 | R9 |
|----|----|----|----|----|----|----|----|----|

FIG. 3

FIG. 4

Method 500

```
┌─────────────┐                              ┌─────────────┐
│ Encoder side│                              │ Decoder side│
└─────────────┘                              └─────────────┘
       │                                            │
┌──────────────────────────────┐                    │
│ 501: Generate a plurality of  │                    │
│ encoded data packets based on │                    │
│ a plurality of original       │                    │
│ data packets                  │                    │
└──────────────────────────────┘                    │
       │   502: Send the plurality of                │
       │   encoded data packets                      │
       │ ──────────────────────────────────────────▶│
       │                                   ┌──────────────────────────────┐
       │                                   │ 503: Receive the plurality of │
       │                                   │ encoded data packets          │
       │                                   └──────────────────────────────┘
       │                                   ┌──────────────────────────────┐
       │                                   │ 504: Decode the plurality of  │
       │                                   │ encoded data packets to obtain│
       │                                   │ the plurality of original     │
       │                                   │ data packets                  │
       │                                   └──────────────────────────────┘
       │                                            │
```

FIG. 5

Each encoded packet includes m data packets

**Encoded packet #1**

$S_1$
$S_{k+1}$
$S_{2k+1}$
$S_{3k+1}$
...
$S_{(m-1)k+1}$

**Encoded packet #2**

$S_2$
$S_{k+2}$
$S_{2k+2}$
$S_{3k+2}$
...
$S_{(m-1)k+2}$

**Encoded packet #3**

$S_3$
$S_{k+3}$
$S_{2k+3}$
$S_{2k+3}$
...
$S_{(m-1)+3}$

**Encoded packet #k**

$S_k$
$S_{k+k}$
$S_{2k+k}$
$S_{3k+k}$
...
$S_{(m-1)k+k}$

...

Redundant data packets

**Encoded packet #k+1**

$S_{k+1}$
$S_{2k+1}$
$S_{2k+1}$
$S_{4k+1}$
...
**L1**

**Encoded packet #k+2**

$S_{k+2}$
$S_{2k+2}$
$S_{3k+2}$
$S_{4k+2}$
...
**L2**

**Encoded packet #k+3**

$S_{k+3}$
$S_{2k+3}$
$S_{3k+3}$
$S_{4k+3}$
...
**L3**

**Encoded packet #k+k**

$S_{k+k}$
$S_{2k+k}$
$S_{3k+k}$
$S_{4k+k}$
...
**Lk**

...

**Encoded packet #(m−1)k+1**

$S_{(m-1)k+1}$
$L_1$
$L_{k+1}$
$L_{2k+2}$
...
$L_{(m-3)k+1}$
$L_{(m-2)k+1}$

**Encoded packet #(m−1)k+2**

$S_{(m-1)k+2}$
$L_2$
$L_{2k+2}$
$L_{3k+2}$
...
$L_{(m-3)k+2}$
$L_{(m-2)k+2}$

**Encoded packet #(m−1)k+3**

$S_{(m-1)k+3}$
$L_3$
$L_{2k+3}$
$L_{2k+3}$
...
$L_{(m-3)k+2}$
$L_{(m-2)k+3}$

**Encoded packet #(m−1)k+k**

$S_{mk}$
$L_k$
$L_{k+k}$
$L_{2k+k}$
...
$L_{(m-3)k+k}$
$L_{(m-2)k+k}$

...

**Encoded packet #mk+1**

$L_{k+1}$
$L_{2k+1}$
$L_{3k+1}$
$L_{4k+1}$
...
$S_1$

**Encoded packet #mk+2**

$L_{k+2}$
$L_{2k+2}$
$L_{3k+2}$
$L_{4k+2}$
...
$S_2$

**Encoded packet #mk+3**

$L_{k+3}$
$L_{2k+3}$
$L_{3k+3}$
$L_{4k+3}$
...
$S_3$

**Encoded packet #mk+k**

$L_{2k}$
$L_{3k}$
$L_{4k}$
$L_{5k}$
...
$S_k$

...

**Encoded packet #(2m−2)k+1**

$L_{(m-1)k+1}$
$S_1$
$S_{k+1}$
$S_{2k+1}$
...
$S_{(m-3)k+1}$
$S_{(m-2)k+1}$

**Encoded packet #(2m−2)k+2**

$L_{(m-1)k+2}$
$S_2$
$S_{k+2}$
$S_{2k+2}$
...
$S_{(m-3)k+2}$
$S_{(m-2)k+2}$

**Encoded packet #(2m−2)k+3**

$L_{k+3}$
$S_3$
$S_{k+3}$
$S_{2k+3}$
...
$S_{(m-3)k+3}$
$S_{(m-2)k+3}$

**Encoded packet #(2m−1)k**

$L_{mk}$
$S_k$
$S_{2k}$
$S_{3k}$
...
$S_{(m-1)k+k}$
$S_{(m-2)k+k}$

...

FIG. 6

Each encoded packet includes m data packets

Encoded packet #1

$S_1$
$S_{k+1}$
$S_{2k+1}$
$S_{3k+1}$
...
$S_{(m-1)k+1}$

Encoded packet #2

$S_2$
$S_{k+2}$
$S_{2k+2}$
$S_{3k+2}$
...
$S_{(m-1)k+2}$

Encoded packet #3

$S_3$
$S_{k+3}$
$S_{2k+3}$
$S_{2k+3}$
...
$S_{(m-1)+3}$

Encoded packet #k

$S_k$
$S_{k+k}$
$S_{2k+k}$
$S_{3k+k}$
...
$S_{(m-1)k+k}$

...

Encoded packet #k+1

$S_{k+1}$
$S_{2k+1}$
$S_{2k+1}$
$S_{4k+1}$
...
$L_1$

Encoded packet #k+2

$S_{k+2}$
$S_{2k+2}$
$S_{3k+2}$
$S_{4k+2}$
...
$L_2$

Encoded packet #k+3

$S_{k+3}$
$S_{2k+3}$
$S_{3k+3}$
$S_{4k+3}$
...
$L_3$

Encoded packet #k+k

$S_{k+k}$
$S_{2k+k}$
$S_{3k+k}$
$S_{4k+k}$
...
$L_k$

...

Redundant data packets

Encoded packet #(m−1)k+1

$S_{(m-1)k+1}$
$L_1$
$L_{k+1}$
$L_{2k+1}$
...
$L_{(m-2)k+1}$
$L_{(m-1)k+1}$

Encoded packet #(m−1)k+2

$S_{(m-1)k+2}$
$L_2$
$L_{2k+2}$
$L_{3k+2}$
...
$L_{(m-2)k+2}$
$L_{(m-1)k+2}$

Encoded packet #(m−1)k+3

$S_{(m-1)k+3}$
$L_3$
$L_{2k+3}$
$L_{2k+3}$
...
$L_{(m-2)k+2}$
$L_{(m-1)k+3}$

Encoded packet #(m−1)k+k

$S_{mk}$
$L_k$
$L_{k+k}$
$L_{2k+k}$
...
$L_{(m-2)k+k}$
$L_{(m-1)k+k}$

...

Encoded packet #mk+1

$L_1$
$L_{k+1}$
$L_{2k+1}$
...
$L_{(m-2)k+1}$
$L_{(m-1)k+1}$

Encoded packet #mk+2

$L_2$
$S_{k+2}$
$L_{2k+2}$
...
$L_{(m-2)k+2}$
$L_{(m-1)k+2}$

Encoded packet #mk+3

$L_3$
$L_{k+3}$
$L_{2k+3}$
...
$L_{(m-2)k+3}$
$L_{(m-1)k+3}$

Encoded packet #mk+k

$L_k$
$L_{k+k}$
$L_{2k+k}$
...
$L_{(m-2)k+k}$
$L_{(m-1)k+k}$

...

Encoded packet #(m+1)k+1

$L_{k+1}$
$L_{2k+1}$
$L_{3k+1}$
$L_{4k+1}$
...
$S_1$

Encoded packet #(m+1)k+2

$L_{k+2}$
$L_{2k+2}$
$L_{3k+2}$
$L_{4k+2}$
...
$S_2$

Encoded packet #(m+1)k+3

$L_{k+3}$
$L_{2k+3}$
$L_{3k+3}$
$L_{4k+3}$
...
$S_3$

Encoded packet #(m+1)k+k

$L_{k+k}$
$L_{2k+k}$
$L_{3k+k}$
$L_{4k+k}$
...
$S_k$

...

Encoded packet #(2m−1)k+1

$L_{(m-1)k+1}$
$S_1$
$S_{k+1}$
$S_{2k+1}$
...
$S_{(m-3)k+1}$
$S_{(m-2)k+1}$

Encoded packet #(2m−1)k+2

$L_{(m-1)k+2}$
$S_2$
$S_{k+2}$
$S_{2k+2}$
...
$S_{(m-3)k+2}$
$S_{(m-2)k+2}$

Encoded packet #(2m−1)k+3

$L_{k+3}$
$S_3$
$S_{k+3}$
$S_{2k+3}$
...
$S_{(m-3)k+3}$
$S_{(m-2)k+3}$

Encoded packet #(2m−2)k+k

$L_{mk}$
$S_k$
$S_{k+k}$
$S_{2k+k}$
...
$S_{(m-3)k+k}$
$S_{(m-2)k+k}$

...

FIG. 7

FIG. 8

| S1 | S2 | S3 | S4 | S5 | S6 | S7 | S8 | S9 | **L4** | **L5** | **L6** | **L7** | **L8** | **L9** |
|----|----|----|----|----|----|----|----|----|--------|--------|--------|--------|--------|--------|
| S4 | S5 | S6 | S7 | S8 | S9 | **L1** | **L2** | **L3** | **L7** | **L8** | **L9** | S1 | S2 | S3 |
| S7 | S8 | S9 | **L1** | **L2** | **L3** | **L4** | **L5** | **L6** | S1 | S2 | S3 | S4 | S5 | S6 |

FIG. 9

| S1 | S2 | S3 | S4 | S5 | S6 | S7 | S8 | S9 | **L1** | **L2** | **L3** | **L4** | **L5** | **L6** | **L7** | **L8** | **L9** |
|----|----|----|----|----|----|----|----|----|--------|--------|--------|--------|--------|--------|--------|--------|--------|
| S4 | S5 | S6 | S7 | S8 | S9 | **L1** | **L2** | **L3** | **L4** | S5 | **L6** | **L7** | **L8** | **L9** | S1 | S2 | S3 |
| S7 | S8 | S9 | **L1** | **L2** | **L3** | **L4** | **L5** | **L6** | **L7** | **L8** | **L9** | S1 | S2 | S3 | S4 | S5 | S6 |

FIG. 10

| S1 | S4 | S7 | S2 | S5 | S8 | S3 | S6 | S9 | **L4** | **L5** | **L6** | **L7** | **L8** | **L9** |
|----|----|----|----|----|----|----|----|----|--------|--------|--------|--------|--------|--------|
| S2 | S5 | S8 | S3 | S6 | S9 | **L1** | **L2** | **L3** | **L7** | **L8** | **L9** | S1 | S4 | S7 |
| S3 | S6 | S9 | **L1** | **L2** | **L3** | **L4** | **L5** | **L6** | S1 | S4 | S7 | S2 | S5 | S8 |

FIG. 11

FIG. 12

| L9 | L8 | L7 | L6 | L5 | L4 | S9 | S6 | S3 | S8 | S5 | S2 | S7 | S6 | S5 | S4 | S3 | S2 | S1 | S1 | |
| S7 | S4 | S1 | L9 | L8 | L7 | L3 | L2 | L1 | S9 | S6 | S3 | S8 | S7 | S6 | S5 | S4 | S3 | S2 | S2 | S1 |
| S8 | S5 | S2 | S7 | S4 | S1 | L6 | L5 | L4 | L3 | L2 | L1 | S9 | S8 | S7 | S6 | S5 | S4 | S3 | | |

Computing device 101

Generation module 110A

Sending module 120A

FIG. 13

Computing device 102

Decoding module 110B

Receiving module 120B

FIG. 14

Computing device 200

Processor 220

Memory 230

Transceiver 210

FIG. 15

## INTERNATIONAL SEARCH REPORT

| International application No. |
| --- |
| **PCT/CN2024/077669** |

| A. | CLASSIFICATION OF SUBJECT MATTER |
| --- | --- |

H04N 19/67(2014.01)i

According to International Patent Classification (IPC) or to both national classification and IPC

| B. | FIELDS SEARCHED |
| --- | --- |

Minimum documentation searched (classification system followed by classification symbols)

IPC:H04N

Documentation searched other than minimum documentation to the extent that such documents are included in the fields searched

Electronic data base consulted during the international search (name of data base and, where practicable, search terms used)

CNTXT, ENTXTC, VEN, CJFD, CNKI, IEEE: 音频, 视频, RTP, 丢包, 冗余, 编码, 码率, 编码率, 编码效率, 前向纠错, 运算, 求和, 异或, audio, video, packet loss, redundant, cod+, cod+ rate, cod+ efficiency, FEC, RED, operat+, add+, XOR

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | JP 2002204220 A (MATSUSHITA ELECTRIC INDUSTRIAL CO., LTD.) 19 July 2002 (2002-07-19) <br> description, paragraphs 1-28, and figures 2-3 | 1-4, 6, 8-16, 18, 20-31 |
| X | CN 113541856 A (HUAWEI TECHNOLOGIES CO., LTD.) 22 October 2021 (2021-10-22) <br> description, paragraphs 2-289 | 1-4, 6, 8-16, 18, 20-31 |
| X | JP 2016119557 A (NIPPON HOSO KYOKAI) 30 June 2016 (2016-06-30) <br> description, paragraphs 16-96 | 1-4, 6, 8-16, 18, 20-31 |
| X | CN 111935485 A (BEIJING JIAXUN FEIHONG ELECTRICAL CO., LTD.) 13 November 2020 (2020-11-13) <br> description, paragraphs 32-61 | 1-4, 6, 8-16, 18, 20-31 |
| A | CN 110830819 A (JUHAOKAN TECHNOLOGY CO., LTD.) 21 February 2020 (2020-02-21) <br> entire document | 1-31 |
| A | CN 110943800 A (YEALINK (XIAMEN) NETWORK TECHNOLOGY CO., LTD.) 31 March 2020 (2020-03-31) <br> entire document | 1-31 |

☑ Further documents are listed in the continuation of Box C.　　☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **14 April 2024** | **29 April 2024** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2024/077669**

**C.    DOCUMENTS CONSIDERED TO BE RELEVANT**

| Category* | Citation of document, with indication, where appropriate, of the relevant passages | Relevant to claim No. |
|---|---|---|
| A | CN 114900716 A (CHINA TELECOM CORP., LTD.) 12 August 2022 (2022-08-12) entire document | 1-31 |
| A | JP 2014099708 A (PANASONIC CORP.) 29 May 2014 (2014-05-29) entire document | 1-31 |
| A | US 2008134005 A1 (IZZAT IZZAT HEKMAT et al.) 05 June 2008 (2008-06-05) entire document | 1-31 |

Form PCT/ISA/210 (second sheet) (July 2022)

**INTERNATIONAL SEARCH REPORT**
Information on patent family members

International application No.

**PCT/CN2024/077669**

| Patent document cited in search report | | | Publication date (day/month/year) | Patent family member(s) | | | Publication date (day/month/year) |
|---|---|---|---|---|---|---|---|
| JP | 2002204220 | A | 19 July 2002 | WO | 0217637 | A1 | 28 February 2002 |
| | | | | AU | 7673101 | A | 04 March 2002 |
| | | | | EP | 1313318 | A1 | 21 May 2003 |
| | | | | JP | WO2002017637 | A1 | 14 October 2003 |
| | | | | US | 2002164024 | A | 07 November 2002 |
| CN | 113541856 | A | 22 October 2021 | WO | 2021209037 | A1 | 21 October 2021 |
| JP | 2016119557 | A | 30 June 2016 | | None | | |
| CN | 111935485 | A | 13 November 2020 | | None | | |
| CN | 110830819 | A | 21 February 2020 | CN | 110830819 | B | 25 March 2022 |
| CN | 110943800 | A | 31 March 2020 | CN | 110943800 | B | 28 April 2023 |
| CN | 114900716 | A | 12 August 2022 | CN | 114900716 | B | 26 September 2023 |
| JP | 2014099708 | A | 29 May 2014 | | None | | |
| US | 2008134005 | A1 | 05 June 2008 | JP | 2008522545 | A | 26 June 2008 |
| | | | | US | 8015474 | B2 | 06 September 2011 |
| | | | | EP | 1817859 | A1 | 15 August 2007 |
| | | | | BRPI | 0516632 | A | 16 September 2008 |
| | | | | WO | 2006060036 | A1 | 08 June 2006 |
| | | | | CN | 101061659 | A | 24 October 2007 |
| | | | | IN | 200703840 | P1 | 31 August 2007 |

Form PCT/ISA/210 (patent family annex) (July 2022)

**REFERENCES CITED IN THE DESCRIPTION**

**Patent documents cited in the description**

• CN 202310695127